# EUROPÄISCHE PATENTSCHRIFT

(11) **EP 3 119 583 B1**
(45) Veröffentlichungstag und Bekanntmachung des Hinweises auf die Patenterteilung: **04.07.2018**
(21) Anmeldenummer: 15704209.4
(22) Anmeldetag: 05.02.2015
(51) Int. Cl.: B29C 55/06, B29C 63/02

(54) **WINKELVERSTELLBARE ANPRESS- ODER NIPWALZE**
ADJUSTABLE-ANGLE PRESSING OR NIP ROLL
CYLINDRE DE PRESSION OU DE CONTACT A RÉGLAGE ANGULAIRE

(30) Priorität: 20.03.2014 DE 102014004020
(43) Veröffentlichungstag der Anmeldung: 25.01.2017
(73) Patentinhaber: Brückner Maschinenbau GmbH & Co. KG, 83313 Siegsdorf (DE)
(72) Erfinder: HÄUSL, Holger, 83317 Teisendorf (DE)
(74) Vertreter: Flach, Dieter Rolf Paul
(86) Internationale Anmeldenummer: PCT/EP2015/000227
(87) Internationale Veröffentlichungsnummer: WO 2015/139798

(56) Entgegenhaltungen:
- EP-A1- 1 516 955
- EP-A2- 0 677 372
- GB-A- 428 206

## Beschreibung

Die Erfindung betrifft eine winkelverstellbare Anpress- oder Nipwalze nach dem Oberbegriff des Anspruches 1.

Derartige winkelverstellbare Anpress- oder Nipwalzen können in unterschiedlichen technischen Bereichen eingesetzt werden. Bedeutung haben sie beispielsweise bei der Folienherstellung in Längsreckmaschinen, einer Abzugsmaschine, einer Beschichtungsanlage und dergleichen. Mit anderen Worten kann eine derartige winkelverstellbare Anpresswalze überall dort eingesetzt werden, wo folienartige Materialbahnen über Walzen hinweg fortbewegt werden, und dabei die fortbewegte Materialbahn unter Verwendung einer sogenannten Anpresswalze oder einer Nipwalze auf die Mantelfläche der Prozesswalze angepresst werden soll. Von daher können die in Rede stehenden Anpress- oder Nipwalzen beispielsweise nicht nur bei der Kunststofffolienherstellung Bedeutung haben, sondern ebenso auch in der Metall- oder Papierindustrie eingesetzt werden. Beschränkungen bestehen insoweit nicht.

Die Bedeutung derartiger winkelverstellbarer Anpresswalzen soll nachfolgend zunächst anhand einer Reckanlage für die Folienherstellung erläutert werden.

Bei der Herstellung thermoplastischer Folien wird zunächst ein Polymergranulat in einem Extruder aufgeschmolzen, und dann einer Flachschlitzdüse zugeführt. Die Schmelze wird an einer Kühlwalze abgekühlt und wird dann einem sog. Längsreckwerk zu geführt. Dort wird der Vorfilm mit einer Einlaufgeschwindigkeit v1 in einer Reihe von Vorheizwalzen erwärmt, und dann in einem sog. Reckwerk in Längsrichtung bzw. Maschinenrichtung MD mit einer Auslaufgeschwindigkeit v2 > v1 gereckt. Nach der Längsreckung (also einer Reckung in Maschinenlängsrichtung MDO) erfolgt eine Verstreckung der Warenbahn in Breitenrichtung (also in einer Querrichtung TDO quer zur Maschinenlängsrichtung). Vor und/oder nach der Breitreckung (TDO) kann eine optionale Beschichtungsanlage vorgesehen sein. Die Warenbahn wird aus der Breit- oder Querreckanlage (TDO) bzw. der Beschichtungsanlage abgezogen und aufgewickelt.

In den erwähnten Längsreckanlagen (MDO), der einen oder der mehreren vorgesehenen Beschichtungsanlagen, dem Folienabzug und am Wickler einer derartigen Gesamtanlage läuft die Waren- oder Materialbahn über Prozesswalzen, die sich über die jeweilige Warenbahnbreite (AB) erstrecken.

Eine derartige oder mehrere derartige achsparallel hintereinander angeordnete Prozesswalzen zum Bearbeiten oder zum Transport thermoplastischer Folien sind in Lagerplatten drehend gelagert. Diese Walzen arbeiten mit einer oder mehreren Anpresswalzen oder Nipwalzen zusammen, die in einer zu beiden Seiten der Walze schwenkbar angeordneten Halterung drehend gelagert sind, und wobei eine Kolben-Zylindereinheit die Anpresswalze an die eingangsseitige Walze anlegt oder von dieser abhebt.

Eine entsprechende Längsreckmaschine insbesondere für thermoplastische Folien mit mehreren achsparallel hintereinander angeordneten Reckwalzen, denen eine drehgelagerte Anpresswalze zugeordnet ist, ist beispielsweise aus der EP 0 677 372 B1 bekannt geworden. Die Anpresswalze ist dabei über ein Stützenpaar verschwenkbar gehalten, wobei die Drehachse des Stützenpaares um eine parallel zur Mittenachse der ein- und/oder ausgangsseitigen Reckwalze verlaufende Welle gelagert ist. Gemäß der EP 0 677 372 B1 wird ferner vorgeschlagen, dass das schwenkbar gelagerte Stützenpaar zusammen mit der Anpresswalze auf einem um die Mittenachse der Reckwalze festlegbaren Drehwinkelbereich gemäß einer Linie schwenkbar und in wenigstens einer ersten und einer zweiten Endposition arretierbar ist.

Mit anderen Worten wird die Anpresswalze gemäß der EP 0 677 372 B1 drehbar gelagert, so dass sie um eine Prozesswalze herum verstellt werden kann. Dabei ist der Schwenkmechanismus der Anpresswalze inklusive des Zustellzylinders auf der Achshalterung der Prozesswalze drehbar gelagert. Die Anpresswalze kann über den Zustellzylinder von der Prozesswalze abgehoben werden.

Im praktischen Betrieb jedoch erweisen sich derartige Lösungen als hinderlich, da die Warenbahn sowohl manuell wie auch maschinell nur äußerst schwer einfädelbar ist.

Der tangentielle Anlaufpunkt wird dabei durch die Warenbahn festgelegt und kann nur in einer Richtung verschoben werden. Dabei kann die Anpresswalze nur in Richtung der bereits anliegenden Fläche der Warenbahn verschoben werden.

Ferner sind aus der EP 1 516 955 A1 verschiedene Ausführungsbeispiele für einen Kalander bekannt geworden, der eine dort als Zwischenwalze bezeichnete Prozesswalze umfasst, die mit mehreren Nipwalzen zusammenwirkt.

Im mehreren Ausführungsbeispielen sind die Nipwalzen dabei etwa mittig auf einem Hebel gelagert, wobei dieser Einstellhebel an seinem einen Ende an dem Kalanderständer drehbar gelagert ist. An dem anderen Ende des Hebels setzt dann eine zylinderförmige Entlastungseinrichtung an, um die Einstellkräfte der Presswalze, mit denen diese an der Prozesswalze anliegt, einzustellen.

In einem anderen Ausführungsbeispiel dieser Vorveröffentlichung ist ein in Seitenansicht zwar winkelförmiger aber gleichwohl einarmiger Hebel vorgesehen, der ebenfalls wieder an seinem einen Ende über eine zylinderförmige Entlastungseinrichtung be- oder entlastet werden kann. Der gegenüberliegende Drehpunkt dieser Hebeleinrichtung ist in einer teilkreisförmigen Ausnehmung lageveränderlich geführt. Die Nipwalze selbst ist in einem mittleren Bereich dieses einarmigen Hebels drehbar gehalten.

Demgegenüber ist es Aufgabe der vorliegenden Erfindung, eine gegenüber einer Prozesswalze winkelverstellbare Anpress- oder Nipwalze zu schaffen, bei der die Anpress- oder Nipwalze bezüglich der Anliegepunkte oder Anliegelinie an einer Prozesswalze möglichst flexibel einstellbar ist. Dabei soll ferner das Einfädeln der Waren- oder Materialbahn erleichtert werden.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Anpresswalzen wie aber auch sogenannte Nipwalzen sind Hilfseinrichtungen, die z.B. in einer Folien-Längsreckmaschine mit Reckwalzen zusammenwirken, um die Folie auf diese Walzen auf- bzw. anzupressen. In Abzugs- und Wickelanlagen sorgen sie dafür, dass eine Warenbahn aus der Reckmaschine befördert und aufgewickelt werden kann. In Beschichtungsanlagen sorgen sie u.a. für die Sicherstellung der Planlage.

Diese Anpresswalzen sollen also je nach Anordnung und Anforderung im Wesentlichen folgende Funktionen erfüllen:
a) Es soll vermieden werden, dass ein Luftpolster, d.h. Luftblasen zwischen der Folie oder allgemein der Materialbahn und der Prozesswalze eingeschlossen werden kann bzw. können.
b) Es soll sichergestellt sein, dass die über eine Prozesswalze hinweggeführte Materialbahn mit entsprechend ausreichenden Kräften an dieser Prozesswalze angedrückt werden kann. Dies hat Bedeutung insbesondere bei der Folienherstellung, um dadurch sicher zu stellen, dass dies zu einer Erhöhung der auf die Folienbahn zu übertragenden Folienreckkräfte beitragen kann.
c) Ferner soll ein Materialbahn-Einspringen verhindert werden, beispielsweise ein sogenannter Folieneinsprung unterbunden werden, vorzugsweise im Bereich einer ausgangsseitigen Prozesswalze.
d) Durch die genaue Einstellung der Anlegelinie können Mikrokratzer auf Folien bzw. -beschichtungen verringert werden.

Bei all diesen Funktionen können also Anpresswalzen verwendet werden, die in der Regel eine Walzenlänge aufweisen, die mit der axialen Länge der Prozesswalze vergleichbar ist. Anstelle dessen können auch sogenannte Nipwalzen eingesetzt werden, die eine bestimmte Position in Bezug auf die Prozesswalze im Einlauf und im Auslauf der Warenbahn einnehmen und üblicherweise nur eine kürzere axiale Längserstreckung als die eigentliche Prozesswalze aufweisen und dabei häufig nur im Bereich der Prozesswalzen-Endabschnitte positioniert und deshalb nur dort wirksam sind.

Die erfindungsgemäße Lösung zeichnet sich durch eine Kombination verschiedener Merkmale aus.

So ist im Rahmen der Erfindung vorgesehen, dass die winkelverstellbare Anpress- und/oder Nipwalze um eine Achse verschwenkbar ist, die zu der eigentlichen Achse der Prozesswalze versetzt angeordnet ist. Im Rahmen der Erfindung ist dabei auch die Achslinie der Verstellachse der Anpress- und/oder Nipwalze soweit radial gegenüber der eigentlichen Prozesswalze versetzt liegend angeordnet, dass ein ausreichender Abstandsraum zwischen Halte- und Verstelleinrichtung der Anpress- und Nipwalze sowie der Anpress- und/oder Nipwalze selbst und der eigentlichen Prozesswalze eingestellt werden kann. Dies erleichtert extrem das Einfädeln der durch die Anlage hindurchzuführenden Materialbahn.

Darüber hinaus zeichnet sich die Erfindung in einer bevorzugten Ausführungsform dadurch aus, dass unterschiedliche anschlagsbegrenzte Winkelstellungen für die Anpress- und/oder Nipwalze eingestellt werden können, in denen dann die Anpress- und/oder Nipwalze auf den Walzenumfang der Prozesswalze zu verstellt werden kann (unter sandwichartiger Aufnahme der dazwischen hindurchgeführten Materialbahn).

Je nachdem welche Funktion die Anpress- oder Nipwalze zu erfüllen hat, muss diese eine bestimmte Position in Bezug auf die Prozesswalze am Einlauf und/oder Auslauf der Warenbahn einnehmen.

Sollen z.B. Lufteinschlüsse zwischen der Prozesswalze und der Folie vermieden werden, muss die Anpresswalze direkt am tangentialen Einlauf der Folie auf die Reckwalze aufsetzen.

Die Kratzerfreiheit zu beschichtender bzw. beschichteter Warenbahnen kann entscheidend verbessert werden, wenn die Position der Anlegelinie mittels eines Defekterkennungssystems während des laufenden Betriebs verstellt und damit optimiert werden kann.

Bei Reckwalzen können die übertragbaren Reckkräfte bzw. die Umschlingungsreibung erhöht werden, wenn die Anpresswalze möglichst nahe am Einlauf des tangentialen Einlaufpunktes der Folie auf die Reckwalze wirkt.

Zur Vermeidung des Einspringens der Folie im Bereich des Reckspaltes am Auslauf der Längsreckmaschine kann auch hier eine Anpresswalze auf die Reckwalze wirken. Ohne eine entsprechende Anpresswalze würde sich, je nach Reibwert zwischen Folie und Reckwalze, ein beim Recken entstehender "Folieneinsprung" von den Randbereichen der Walze über deren Oberfläche in Richtung Walzenmitte fortsetzen.

Ein Verlaufen der Warenbahn entlang der Querrichtung (TDO) kann bei allen Walzen durch eine erfindungsgemäße Anpress- und/oder Nipwalze verhindert bzw. minimiert werden.

Durch die Erfindung ist es möglich, dass die Anpressrichtung der Anpress- und/oder Nipwalze nicht gleich der Zustellrichtung dieser Walze ist.

Die Position der Anpresswalze lässt sich relativ zur Prozesswalze auch während des Betriebes verstellen. Dies bietet wichtige Vorteile, da es für manche Prozesse erforderlich ist, die Position laufend zu optimieren.

Die Steuermechanik ist unabhängig von der Mechanik der Prozesswalze.

Zudem wird im Rahmen der Erfindung das Einfädeln der Warenbahn erleichtert.

In vielen Reckwerken, Beschichtungsanlagen und Abzugs- und/oder Wicklervorrichtungen ändern sich mit der jeweiligen Anwendung die Anlegerichtung und der Anlagewinkel der Waren- oder Materialbahn auf die Prozesswalze. Hier schafft die Erfindung gegenüber herkömmlichen Lösungen deutliche Vorteile, vor allem deshalb, weil der Anlegepunkt bzw. die Anlegelinien flexibel an die Ablauf- und/oder Herstellprozesse angepasst werden können, wobei ferner vor allem auch das Einfädeln bzw. Einführen der Waren- oder Materialbahn deutlich erläutert wird.

Im Gegensatz zu einer Ausführungsform, die aus dem gattungsbildend Stand der Technik gemäß der EP 1 516 955 A1 bekannt ist, lässt sich also im Rahmen der Erfindung durch eine ganz spezifisch ausgebildete, anschlagsbegrenzte Positions- und Krafteinstelleinrichtung unter Verwendung eines zweiseitigen oder zweiarmigen Hebels ermöglichen, dass die entsprechenden Anpresskräfte der Nipwalzen an der Prozesswalze sowohl über den Drehpunkt als auch über den Kraftarm und dabei über die Anschlagflächen eingeleitet werden, die eine Verschwenkbewegung des doppelarmigen Hebels zumindest in einer Richtung begrenzen. Dabei lässt sich in einer bevorzugten Ausführungsform der Erfindung über den Drehpunkt und/oder die Anschlagfläche sowohl die Position als auch die Krafteinleitung vornehmen, was in der gattungsbildenden Lösung nicht möglich ist.

Nachfolgend wird die Erfindung anhand von Zeichnungen näher erläutert. Dabei zeigen im Einzelnen:
- Figur 1:: eine schematische räumliche Darstellung einer Prozesswalze mit einer einlauf- und auslaufseitig angeordneten Anpresswalze als erstes erfindungsgemäßes Ausführungsbeispiel;
- Figur 2:: eine vergrößerte Detaildarstellung aus Figur 1;
- Figur 3:: eine vertikale Axialschnittdarstellung durch die Anordnung gemäß Figur 1 oder 2 unter Draufsicht auf die in Figur 1 und 2 links liegende Verstelleinrichtung;
- Figur 4:: eine ausschnittsweise Darstellung der Verstelleinrichtung, und zwar in einer zu Figur 3 um 90° verdrehten Seitenansicht;
- Figur 5:: eine vergrößerte Detaildarstellung aus Figur 4;
- Figur 6:: eine nochmals vergrößerte Detaildarstellung ähnlich zu Figur 3;
- Figur 7:: eine vergrößerte Axialschnittdarstellung durch das Ende einer Anpresswalze unter Darstellung einer Brems- und Reibeinrichtung zur Vermeidung einer schwerkraftbedingten Verschwenkung der Anpresswalze;
- Figur 8.1 und 8.2:: eine axiale Ansicht im Schnitt durch die Prozesswalze und die damit im Eingriff befindliche Anpresswalze einschließlich einer zugehörigen anschlagsbegrenzten Verstelleinrichtung während des Betriebes bzw. in abgehobener Parkposition, wobei eine erste anschlagsbegrenzte Anschlaghöhe voreingestellt ist, worüber die Anlageposition der Anpresswalze an der Prozesswalze vorgegeben ist;
- Figur 8.3 und 8.4.:: eine zu Figur 8.1 und 8.2 vergleichbare Darstellung mit einer Anpresswalze, die sich gemäß Figur 8.3 in Betriebsstellung und gemäß Figur 8.4 in abgehobener Parkposition befindet, jedoch bei zu Figur 8.1 und 8.2 unterschiedlich eingestellter Anschlagshöhe;
- Figur 9:: eine schematische Seitenansicht parallel zu den Achsen der Anpresswalze und der Prozesswalze zur Verdeutlichung der Funktionsweise; und
- Figur 10:: eine ähnliche Darstellung zu Figur 8.1 bzw. 8.3, jedoch in einer dazu verschwenkbar ausgerichteten Positionierung, wie sie üblicherweise in einer Reckanlage vorgesehen ist.

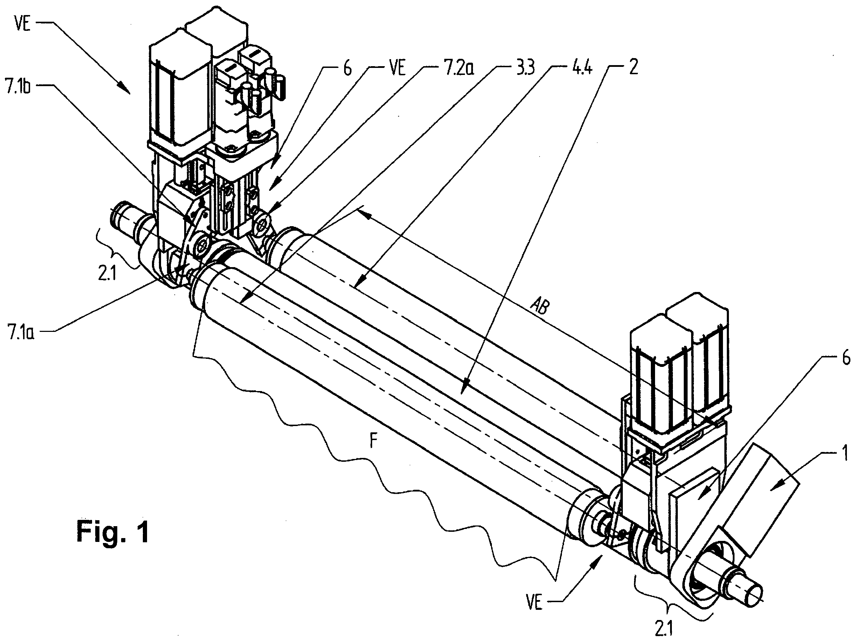

In den beigefügten Zeichnungen ist zu ersehen, dass beispielsweise eine Prozesswalze 2 im Bereich ihrer gegenüberliegenden Stirnseiten über Lager 2.1 drehbar in dort vorgesehenen Haltvorrichtungen 1 beispielsweise in Form einer jeweiligen Lagerplatte gelagert ist. Die Haltevorrichtungen 1, die sich an den gegenüberliegenden Stirnseiten der in Figur 1 gezeigten Walzen, also der Prozesswalze 2 sowie der Anpress- und/oder Nipwalzen 3, 4 anschließen, können identisch oder zumindest in wesentlichen Teilen ähnlich aufgebaut sein. Über die Prozesswalze läuft der Film F. An der Haltevorrichtung 1 ist die Verstellmechanik 6 für die Anpress- bzw. Nipwalzen 3, 4 angeschraubt.

Die Haltevorrichtung 1 kann unterschiedlich, je nach Anwendung ausgeführt und befestigt werden.

Die Prozesswalze 2 erstreckt sich über die jeweilige Arbeitsbreite AB der Warenbahn. Werden statt Anpresswalzen 3, 4 sog. Nipwalzen verwendet, dann geht deren Walzenbreite nicht über die gesamte AB, sondern Nipwalzen werden nur in den Randbereichen der Warenbahn eingesetzt, und sind dementsprechend kürzer. Eine Verstelleinrichtung VE mit zugehöriger Verstellmechanik 6 ist spiegelbildlich symmetrisch zur sog. Drive- und Operator-Site (also auf der rechten und linken Seite der Abbildung gemäß Figur 1).

Die Verstelleinrichtung VE mit der Verstellmechanik 6 umfasst Verstellschlitten 6.2 und Linearführungen 6.1, worüber die Anpress- oder Nipwalzen 3, 4 durch eine Kraftbetätigungseinheit 10 auf die Prozesswalze 2 zugestellt und kraftbeaufschlagt werden können. In Betriebsstellung üben also die Anpress- oder Nipwalzen 3, 4 über ihren zugehörigen Walzenmantel 3' bzw. 4' einen Anpressdruck auf den Walzenmantel 2' der Prozesswalze 2 aus, wobei zwischen dem jeweiligen Mantel 3', 4' der Anpress- oder Nipwalze 3, 4 und dem Walzenmantel 2' der Prozesswalze 2 die Materialbahn F hindurchgeführt ist, auf die die entsprechenden Anpresskräfte wirken. Gegenüber dieser Betriebsstellung kann dann mittels der erwähnten Verstelleinrichtung VE die Anpress- oder Nipwalze 3, 4 von der Prozesswalze 2 wegverfahren werden, unter Ausbildung eines entsprechenden Abstandes zwischen den Anpress- oder Nipwalzen 3, 4 einerseits und der Prozesswalze 2 andererseits. Wie nachfolgend noch gezeigt werden wird, umfasst die hierfür vorgesehene Verstelleinrichtung VE eine Verfahreinrichtung VF, die im Rahmen der Erfindung als lineare oder translatorisch verstellbare Verfahreinrichtung VF ausgebildet ist, sowie zusätzlich eine Winkelverstelleinrichtung WE, über die unterschiedliche Anlagepositionen der jeweiligen Anpress- oder Nipwalze 3, 3 bezogen auf die Prozesswalze 2 einstellbar sind.

Als Kraftbetätigungseinheit 10 können alle Möglichkeiten nach dem Stand der Technik wie Pneumatik- Hydraulikzylinder, mechanische und elektromechanische Varianten verwendet und eingesetzt werden.

Die Anpresswalzen 3 bzw. 4 sind drehbar zu den Achsmittellinien 3.5 und 4.5 an den Verstellhebeln 7.1 bzw. 7.2 befestigt.

Die Hebelarme der beiden Verstellhebel 7.1, 7.2 sind an Schwenkachse 8.1, 8.2 drehbar gelagert. Die Schwenkachse(n) sind an vorgesehenen Verstellschlitten 6.2 befestigt.

Mit anderen Worten ist also auch aus der Zeichnung zu ersehen, dass die Winkelverstelleinrichtung WE einen doppelarmigen Verstellhebel 7.1, 7.2 umfasst. Dieser Verstellhebel 7.1, 7.2 ist jeweils über die Winkelverstelleinrichtung WE über eine Verschwenkachse 8.1, 8.2 an der Verfahreinrichtung VF verschwenkbar gehalten, wobei die Verschwenkachse 8.1, 8.2 mittels der Verfahreinrichtung VF längs der Zustellrichtung ZR verfahrbar ist.

Bewegt sich der jeweilige Verstellschlitten 6.2 in Richtung der Prozesswalze 2, dann trifft ein Anschlagbolzen 9.2 je nach Einstellung auf einen Anschlag bzw. eine Anschlagfläche 9.1 oder die Anpresswalze 3, 4 berührt die Prozesswalze 2.

Der jeweilige Anschlagbolzen 9.2 ist mit dem Schwenkhebel 7.1 bzw. 7.2 fest verbunden. Die Anschlagfläche 9.1 kann über vorgesehene Stellantriebe 11 automatisch oder manuell verschoben werden. Als Stellantriebe 11 können alle Antriebe nach dem Stand der Technik verwendet werden. Ferner kann ein Getriebe 11.1 dazwischen geschaltet werden.

Die Anschlagverstellung besteht aus einer Halteplatte 90.1, in der sich Langlöcher 90.2 befinden, die als Führung für die Verstelleinheit 90.3 dienen.

Anzeigeeinheiten 100.1 dienen zur weiteren Führung der Verstelleinheiten 90.3 und zur optischen Anzeige des Verstellweges, wozu eine Skala 100.2 vorgesehen ist.

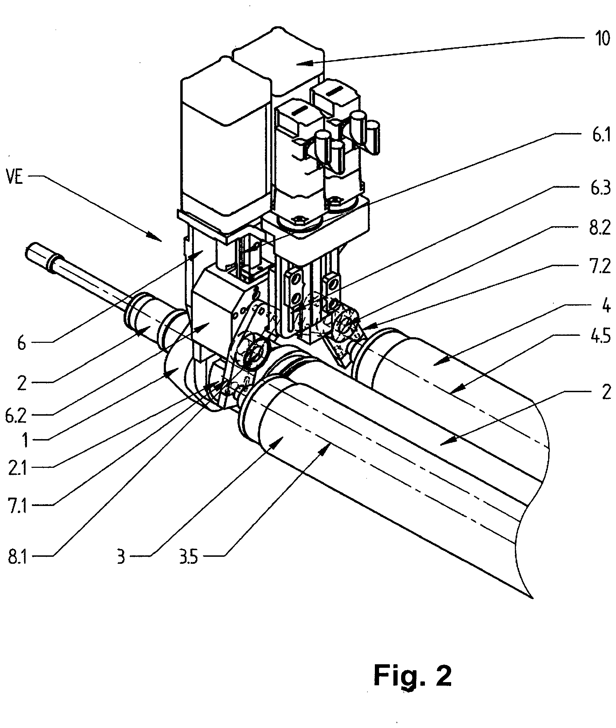

Aus den Zeichnungen ist ferner zu ersehen, dass die beiden Verstellhebel 7.1 und 7.2 zur Verstellung der in Figuren 1 und 2 weiter vorne oder links liegenden Anpresswalze 3 bzw. der weiter hinten oder eher rechts liegenden Anpresswalze 4 jeweils um die erwähnte Schwenkachse 8.1 zw. 8.2 schwenkbar sind. Dabei umfassen die beiden Verstellhebel 7.1 und 7.2 jeweils in entgegengesetzter oder voneinander weg verlaufender Richtung dabei leicht winkelig zueinander ausgerichtete Hebelarme 7.1a und 7.1b bzw. 7.2a und 7.2b. An dem jeweiligen in den Figuren 1 und 2 eher nach unten verlaufenden Verstellhebel-Arm 7.1a bzw. 7.2a ist die jeweilige Anpress- oder Nipwalze 3, 4 gelagert. An dem dazu eher gegenüberliegenden und eher nach oben weg verlaufenden Verstellhebel-Arm 7.1b bzw. 7.2b ist der jeweilige erwähnte und mit dem Verstellhebel mit verschwenkbare Anschlag oder Anschlagsbolzen 9.2 ausgebildet. Die wirksame Länge des die jeweilige Anpress- oder Nipwalze tragenden Verstellhebel-Arms 7.1a bzw. 7.2a (ausgehend von der Schwenkachse 8.1 bzw. 8.2 bis zur zugehörigen Achsmittellinie 3.5 bzw. 4.5 der Anpresswalze 3, 4) ist mit LV in Figur 2 gekennzeichnet, wobei die wirksame Länge zwischen der jeweiligen Schwenkachse 8.1 bzw. 8.2 und der Position des Anschlagbolzens 9.2 auf dem jeweils zweiten Verstellhebel-Arm 7.1b bzw. 7.2b durch die Größe LB in Figur 2 gekennzeichnet ist.

Über die Hebelverhältnisse LV und LB (also über die Hebelverhältnisse bezüglich der Hebelarme 7.1a zu 71.b bzw. 7.2a zu 7.2b) werden sowohl die Position als auch die Anpresskräfte bei einstellbarer Anpresskraft der Kraftmechanik 10 bestimmt. Je nach Höhe der Anschlagfläche 9.1 wird also die Position als auch die Krafteinleitungsrichtung der Anpresswalze 3, 4 gegenüber der Prozesswalze 2 bestimmt.

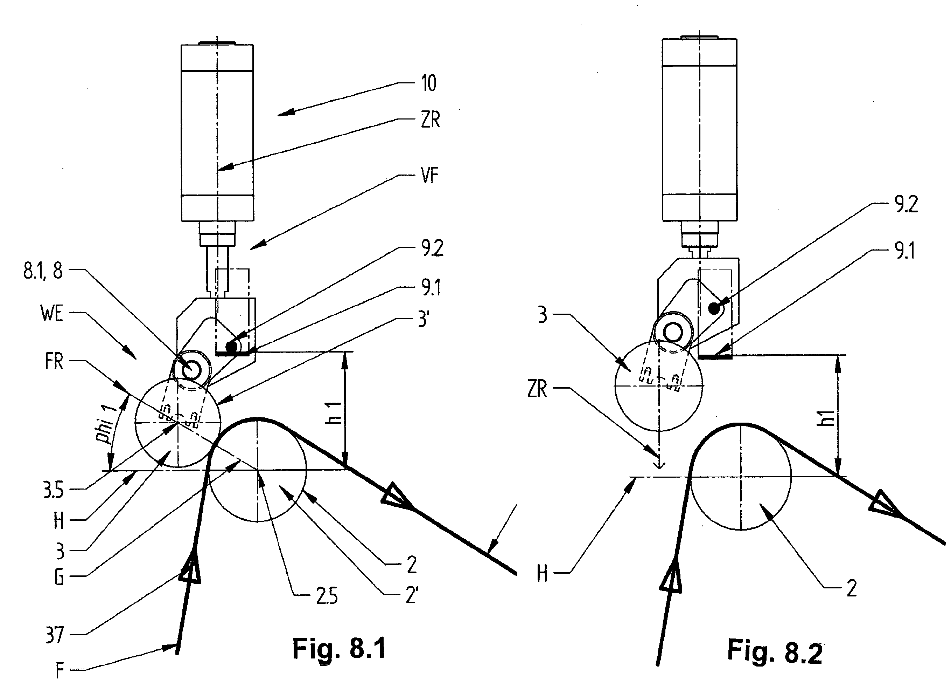

Durch eine Veränderung der Position der Anschlagfläche ist also eine Verstellung der Position der dadurch unterschiedlich eingestellten Anpress- oder Nipwalze 3, 4 bezogen auf die jeweilige Prozesswalze 2 möglich, und dies sogar während des Betriebes bei fortlaufend fortbewegter Materialbahn F. Anhand der später noch erörterten Figuren 8.1 bis 8.4 ist dabei zu ersehen, wie die Anlagelinie zwischen der jeweiligen Anpress- oder Nipwalze 3, 4 und der Prozesswalze 2 durch unterschiedliche Einstellungen der Anschlagfläche oder des Anschlages 9.1 veränderbar ist. Dadurch wird die Anpresslinie in ihrer Position verändert, längs der über den Walzenmantel 3', 4' der Anpress- oder Nipwalze 3, 4 ein entsprechender Druck auf den Walzenmantel 2' der Prozesswalze 2 ausgeübt wird.

Zudem kann durch den erläuterten Aufbau die Anpresskraft verändert werden.

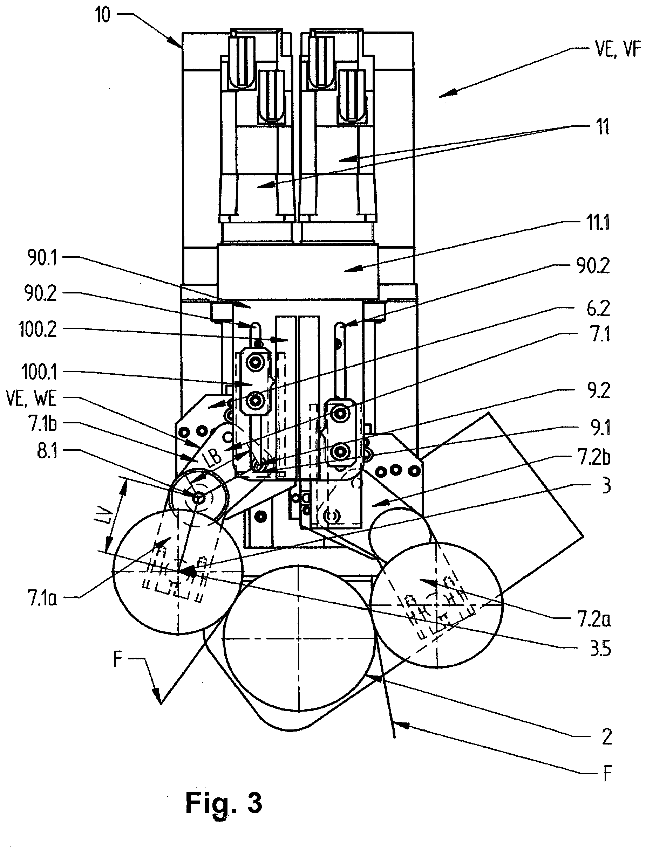

Wie aus der Seitenansicht gemäß Figur 3 zu ersehen ist, kann die Anpressvorrichtung sowohl auf der An- und Ablaufrichtung des Filmes, aber auch nur auf einer Richtung montiert werden. Die Einstellungen der tangentialen Anlauflinie können entsprechend angepasst werden.

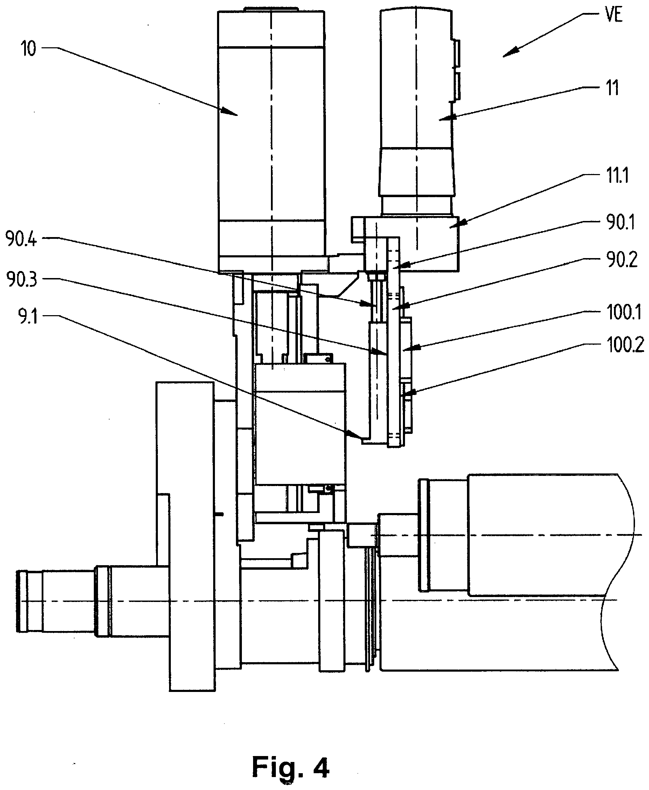

Die Verstelleinheit 90.3 für die Anschlagfläche 9.1 wird mittels einer Spindel 90.4 mit dem Stallantrieb 11 und dem optionalen Getriebe 11.1 verstellt (Figur 4).

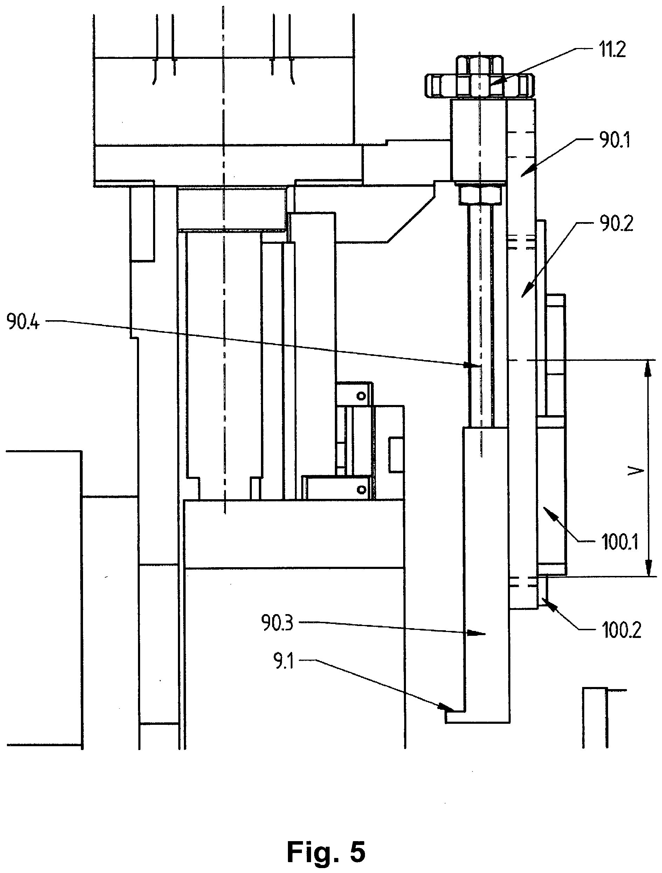

Bei Verstellung (Verschwenkung) der Verstellhebel 7.1 bzw. 7.2 trifft der Anschlagbolzen 9.2, der fest am Verstellhebel 7.1 verschraubt ist, auf diese Anschlagfläche (in den Figuren 4 und 5 nicht dargestellt) . In Figur 5 ist eine manuelle Verstellung über ein Handrad 11.2 dargestellt.

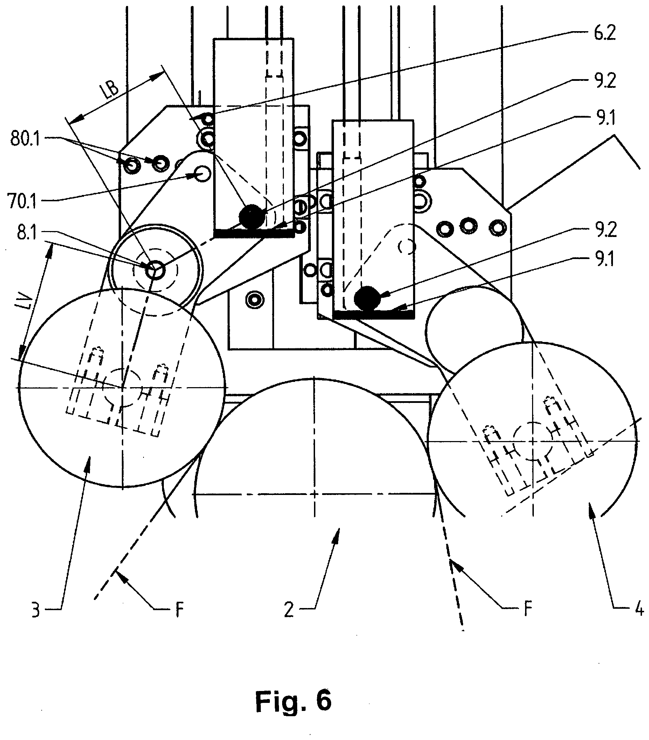

Figur 6 zeigt den Verstellhebel 7.1 mit dem Anschlagbolzen 9.2 bei abgenommener Halteplatte 90.1 und gesamter abgebauter Verstelleinheit zur Verdeutlichung der Hebelverhältnisse. Lediglich die "virtuelle" Anschlagfläche 9.1 ist zur Verdeutlichung mit dargestellt.

In besonderen Fällen kann der Verstellhebel 7.1 bzw. 7.2 auch festgestellt werden, indem der jeweilige Verstellhebel 7.1 bzw. 7.2 an dort vorgesehenen Bohrungen 70.1 festschraubt wird.

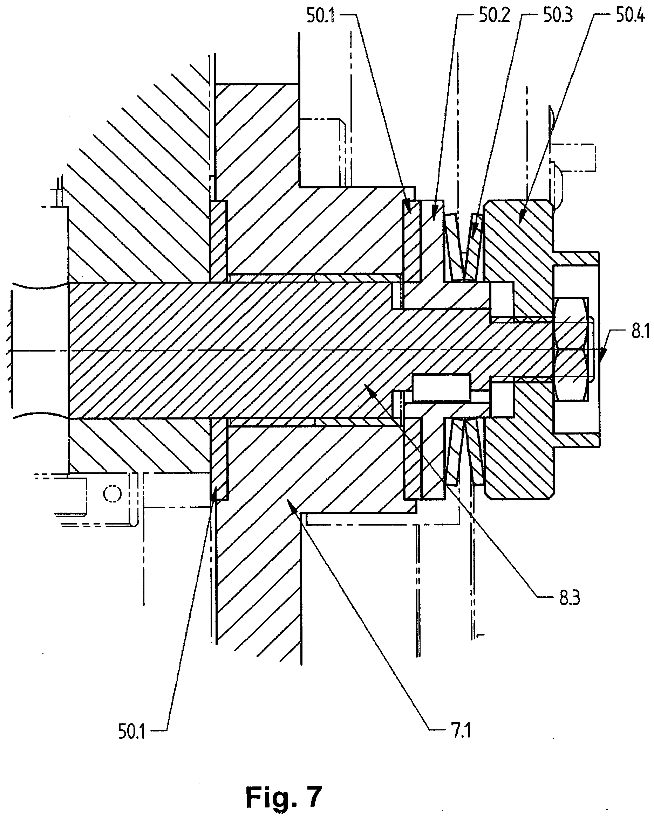

Wird die Anpresswalze 3, 4 über Verstelleinrichtung VE von der Prozesswalze 2 abgehoben, dann würde aufgrund der Schwerkraft die Anpresswalze länger aufliegen, was verfahrenstechnisch nicht wünschenswert ist. Deshalb wird die Drehung um die Lagerachse 8.1 durch einen Bremsmechanismus unterbunden. Figur 7 zeigt den Schnitt durch die Hebelachse 8.1, auf der sich der Verstellhebel 7.1 dreht. In einer Aussparung befinden sich die zwei Bremsscheiben 50.1, die über eine Zentrierscheibe 50.2 auf der Drehachse angebracht sind. Über eine Tellerfeder 50.3 und eine Andrückplatte 50.4 kann die Reibung so eingestellt werden, dass der betreffende Verstellhebel 7.1 bzw. 7.2 in seiner letzten Position ortsfest stehen bleibt. Dabei sind die beiden Bremsscheiben 50.1 axial versetzt zueinander angeordnet, und zwar in Axialrichtung der jeweiligen Schwenkachse 8.1 und 8.2. Dabei sitzen die Bremsscheiben 50.1 als Lochscheiben auf einem entsprechenden Achsbolzen 8.3 der die jeweilige Schwenkachse 8.1 bzw. 8.2 bildet. Damit werden die beiden Bremsscheiben 50.1 in Axialrichtung aufeinander zu kraftbeaufschlagt, und zwar unter sandwichartiger Zwischenaufnahme eines entsprechenden Abschnittes des Verstellhebels 7.1 (bzw. 7.2).

Die nachfolgenden Figuren 8.1 bis 8.4 zeigen unterschiedliche Beispiele jeweils in axialer Schnittdarstellung einer Prozesswalze 2, die auf der Einlaufseite der Prozesswalze mit einer Anpresswalze 3 in Kontakt bringbar ist. Mit anderen Worten berühren sich der Walzenmantel 3' der Anpresswalze 3 und der Walzenmantel 2' der Proesswalze 2 längs einer parallel zur Achsmittellinie der Walzen befindlichen Kontaktlinie, wobei die Walzenmäntel 2' und 3' nicht unmittelbar in Kontakt stehen, da zwischen beiden Walzenmänteln 2' und 3', wie dargestellt, natürlich die Materialbahn oder beispielsweise der Kunststofffolienfilm F hindurchgeführt ist. Eine Verstellung der Anpresswalze 3 erfolgt mittels der erläuterten Verstelleinrichtung VE, die eine die Anpresswalze zwischen einer Betriebsstellung und einer Parkposition verfahrende Verfahreinheit VF (die im gezeigten Ausführungsbeispiel aus einer eine translatorische Verstellung ermöglichenden Verfahreinheit VF besteht) und eine Winkelverstelleinrichtung WE für die jeweilige Anpress- oder Nipwalze 3 umfasst. Über die erwähnte Kraftbetätigungseinheit 10 können die entsprechenden Anpresskräfte erzeugt und eingestellt werden. Mit anderen Worten wird also über die Kraftbetätigungseinheit 10 über die erläuterte Halte- und Verstelleinrichtung die Anpresswalze 3 längs einer Anlagelinie parallel zur Walzen-Drehachse an den Walzenmantel 2' (also die Mantel- oder Oberfläche der Prozesswalze 2) angepresst, wobei zwischen dem Walzenmantel (oder der Mantel- oder Oberfläche) der Anpresswalze 3 und der Mantel- oder Oberfläche der Prozesswalze 2 die Materialbahn F längs der Pfeildarstellung 37 (also zwischen den beiden Walzen) hindurchgeführt und in einem Teilumschlingungswinkel um die Prozesswalze herumgeführt ist.

In Figur 8.1 ist dabei die Anpresswalze 3 in ihrer Arbeits- oder Betriebsposition gezeigt, in der eine durch die Achsmittellinie der Anpresswalze 3 sowie der Prozesswalze 2 geführte Gerade G gegenüber einer Ebene H einen Winkel ϕ1 einnimmt. Diese Ebene H ist letztlich senkrecht zu der Zustellrichtung ZR der Verfahreinheit VF ausgerichtet, die insoweit durch die Schlittenanordnung durch die Verstelleinrichtung mittels der Kraftbetätigungseinrichtung verläuft. Dabei ist ferner eine Anschlaghöhe h1 eingestellt, die durch den Abstand zwischen der Achsmittellinie 2.5 der Prozesswalze 2 und der Lage des Anschlags oder der Anschlagfläche 9.1 definiert ist, also in Parallelrichtung zur Zustellrichtung ZR, mit der die Winkelverstelleinrichtung WE, d.h. die die Hebelarme 7.1 (und gegebenenfalls 7.2) verschwenkbar haltende Schwenkachse 8 (hier also bezüglich der Anpresswalze 3 die Schwenkachse 8.1) durch die Kraftbeaufschlagungseinrichtung verstellt wird. Wird über den Pneumatikzylinder die gesamte Verstelleinheit VE in Zustell-Richtung ZR in Richtung Prozesswalze verfahren, kann nach Berührung der Mantel- oder Oberfläche 3' die Anpresswalze 3 auf der Materialbahn F in dem Bereich, in dem die Materialbahn F auf der Mantel- oder Oberfläche 2' der Prozesswalze 2 anliegt, in der gezeigten Darstellung im Uhrzeigersinn verschwenkt werden, und zwar so weit, bis der Verschwenkhebel 7.1 mit dem daran befestigten Anschlagsbolzen 9.2 auf der Anschlagfläche 9.1 anschlägt. Eine weitere Verschwenkung im Uhrzeigersinn ist dann nicht möglich, so dass durch entsprechende Verstellung des Pneumatikzylinders (also der Kraftbetätigungseinheit 10) letztlich die Anpresskräfte definiert werden können.

In Figur 8.2 ist die Anpresswalze 3 in ihrer Parkposition gezeigt, in der die Anpresswalze 3 einschließlich der Schwenkachse 8.1 und dem Anschlagbolzen 9.2 angehoben ist, wobei sich der Anschlagbolzen 9.2 von der Anschlagfläche 9.1 entfernt. Mit anderen Worten ist zwischen dem Mittelpunkt, d.h. also der Achsmittellinie 2.5 durch die Anpresswalze 2 hindurch, und dem Anschlag bzw. der Anschlagfläche 9.1 der voreingestellte Abstand, d.h. die Anschlaghöhe h1 unverändert verblieben.

Dabei ist in Figur 8.2 auch die Zustellrichtung ZR eingezeichnet, längs der bei Betätigung der Kraftbetätigungseinheit 10 der translatorisch wirkende Verstellteil der gesamten Verstelleinrichtung VE (also die sog. Verfahreinheit VF) und damit die Anpresswalze 4 verfahren wird. Dabei kann die Anpresswalze 3 aus ihrer Parkposition gemäß Figur 8.2 so weit längs der Zustellrichtung ZR verfahren werden, bis die Mantelflächen der Anpresswalze und der Prozesswalze unter hindurchgeführter Materialbahn F die entsprechenden Anpresskräfte erzeugen. Die Winkelverstelleinrichtung WE kann nur insoweit wirksam sein und zu einer Verstellung im Uhrzeigersinn führen, bis der erwähnte Anschlag 9.2 auf dem Anschlag oder der Anschlagfläche 9.1 auftritt.

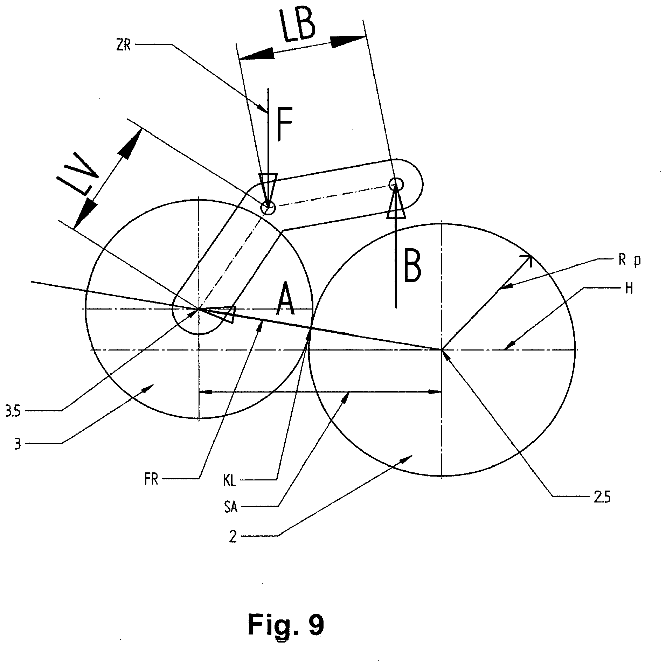

Ferner wird an dieser Stelle angemerkt, dass die Kraftbeaufschlagungsrichtung FR wie in der vergrößerten Detaildarstellung gemäß Figur 9 verläuft, also in der gezeigten Zeichen- oder Schnittebene senkrecht zu den Achslinien 2.5 und 3.5 der Walzen derart, dass die Kraftbeaufschlagungsrichtung FR die Achmittellinie 3.5 der Anpresswalze 3, die Berühr- oder Kontaktlinie KL zwischen den Walzenmäntel der beiden zusammenwirkenden Walzen 2 und 3 sowie die Achsmittellinie 2.5 der Prozesswalze 2 schneidet.

Dabei wird ferner angemerkt, dass bei der Darstellung gemäß den Figuren 8.1 bis 8.4 nur eine der möglichen Gesamtausrichtungen der Kraftbetätigungseinrichtung 10 einschließlich der linearen Verstellschlitten 6.2 für die Verfahreinrichtung VE gezeigt ist. Denn die durch die Achsmittellinie 2.5 der Prozesswalze 2 hindurchlaufende Ebene H liegt per Definition letztlich nur senkrecht zur Zustellrichtung ZR, mit der die Verstellachse 8 der Winkelverstelleinrichtung WE durch die Kraftbetätigungseinrichtung 10 auf die Prozesswalze 2 zu oder von dieser weg verstellt wird. Mit anderen Worten weicht die Ebene H in der Regel von einer Horizontalebene ab.

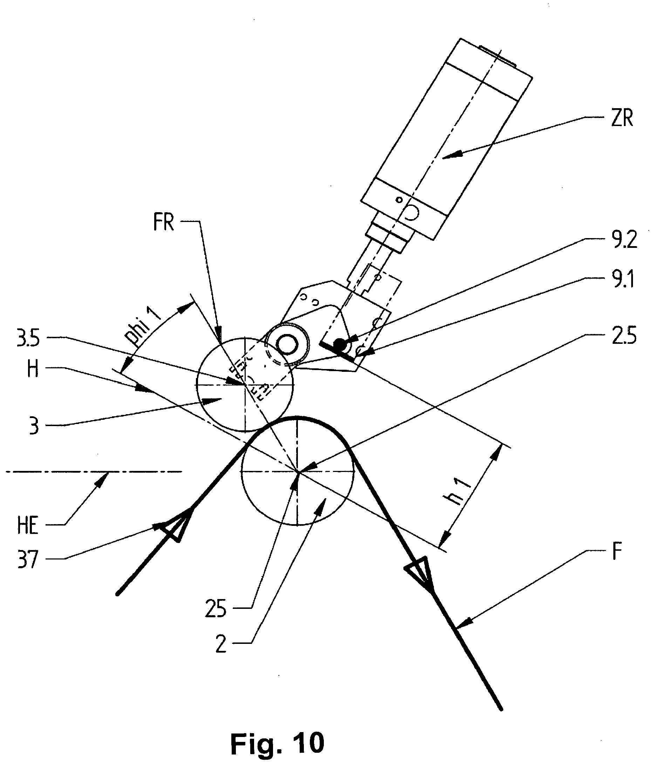

Dies ist letztlich auch in Figur 10 gezeigt, die sich von den Figuren 8.1 bis 8.4 im Wesentlichen nur dadurch unterscheidet, dass die Gesamtanordnung gegenüber den Figuren 8.1 bis 8.4 in unterschiedlicher Winkellage ausgerichtet ist. Daraus ist zu ersehen, dass die Ebene H auch in dieser Variante zwar winklig zu einer Horizontalebene HE aber weiterhin senkrecht zur Zustellrichtung ZR der Kraftbetätigungseinrichtung ausgerichtet verläuft. Auch in diesem Fall ist wiederum der Winkel ϕ 1 sowie die Kraftbetätigungseinrichtung FR eingezeichnet, mit der die Anpresswalze 3 auf die auf der Prozesswalze 2 in einem Umschließungswinkel umlaufende Materialbahn F angepresst ist.

Auch aus der Darstellung gemäß Figur 10 ist dabei ebenfalls wieder der Abstand h1 zu ersehen, d.h. der wirksame Abstand h1, der dem Abstand zwischen dem Anschlag bzw. der Anschlagfläche 9.1 und der Ebene H entspricht, die senkrecht zur Zustellrichtung ZR der Kraftbetätigungseinrichtung ausgerichtet ist.

Die Variante gemäß Figur 10 zeigt, dass die Gesamtanordnung in jedweder möglichen Ausrichtung und Verdrehlage in einer entsprechenden Anlage eingebaut und montiert sein kann.

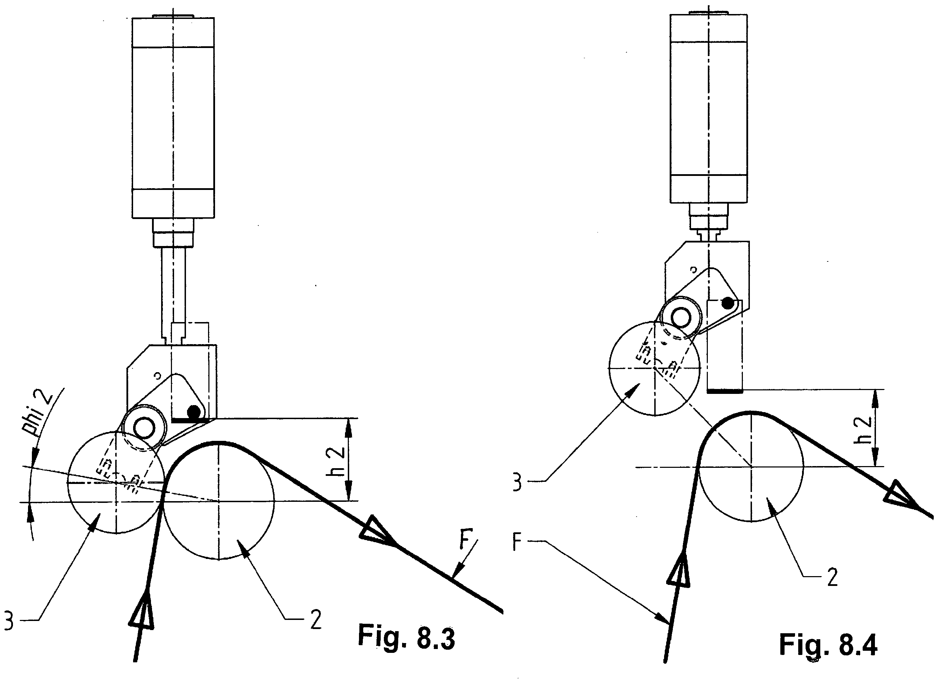

Der Winkel phi1 stellt dabei den Winkel dar, mit dem die Kraftbeaufschlagungsrichtung FR der Anpresswalze 3 in Richtung Mantel 2' der Prozesswalze 2 gegenüber einer Ebene H ausgerichtet wirkt, wobei die Ebene H senkrecht zur Zustellrichtung ZR verläuft. Dieser Winkel kann beliebige Werte beispielsweise zwischen 0° und 90° oder sogar über 90° hinaus aufweisen, wenn nämlich die Anpresswalze 4 auf der zu den Figuren 8.1 und 8.3 bzw. zu Figur 10 anderen Seite der Prozesswalze 2 anliegt, und zwar dort in einem Bereich, in dem die Materialbahn F noch am Walzenmantel der Prozesswalze anliegend geführt ist.

Mit anderen Worten kann die Zustellrichtung ZR in weiten Bereichen von ϕ1 = 0° bis weit über 90° hinaus in einem geeigneten Winkel um den Achsmittelpunkt 2.5 der Prozesswalze 2 herum positioniert werden.

Würde beispielsweise in den Ausführungsbeispielen gemäß Figuren 8.1, 8.3 oder 10 der Winkel ϕ1 den Wert 0° einnehmen, so könnte im Rahmen der Erfindung immer noch eine Kraft über die Anpresswalze 3 auf die Prozesswalze 2 ausgeübt werden, und zwar durch die Winkelverstelleinrichtung WE in Form des in den Figuren gezeigten Schwenkhebels 7 mit seinen zugehörigen Schwenkhebelarmen 7.1a und 7.1b, die eine Länge LV bzw. LB aufweisen. Die Anpresskraft ist dabei über die Zustellkraft einstellbar, so dass zwischen der Anpresswalze und der Prozesswalze kein Schlupf entstehen kann.

Dies wäre bei einer herkömmlichen Lösung so nicht realisierbar, bei der beispielsweise eine Anpresswalze 4 ohne Verwendung der im Rahmen der Erfindung vorgesehenen Umlenkhebel 7.1 auf die Prozesswalze angepresst gehalten werden würde. Denn der Anpressdruck zwischen der Anpresswalze und der Prozesswalze würde dann nur noch von dem tatsächlichen Abstand zwischen den Achsmittellinien beider Walzen abhängen, wobei dieser Abstand der Summe der beiden Radien der beiden Walzen 2 und 4 entsprechen würde. In der Praxis würde man dadurch ein schwingungsfähiges System mit Resonanzfrequenz erzeugen, mit der Folge, dass immer wieder ein Schlupf zwischen der Anpresswalze und der Prozesswalze auftreten würde.

Aus der Beschreibung geht also auch hervor, dass die Zustellrichtung ZR im Rahmen der Erfindung so ausgerichtet werden kann, dass zwischen der Zuführrichtung ZR und der Kraftbeaufschlagungsrichtung FR ein unterschiedlicher Winkel (= 90° - ϕ1) einstellbar ist.

Dabei ist aus der Darstellung beispielsweise gemäß Figuren 8.1 und 8.2 auch zu ersehen, dass der durch die Achsmittellinie 3.5 der Anpress- oder Nipwalze 3 verlaufende Zustellvektor (Zustellrichtung) in Richtung Prozesswalze 2 senkrecht zu der Ebene H) in einem Seitenabstand SA an der Achsmittellinie 2.5 der Prozesswalze 2 vorbeiläuft (Figur 9). Dabei erweist es sich als günstig, wenn dieser Seitenabstand SA Werte aufweist, die zumindest 10%, vorzugsweise zumindest 20%, 30%, 40%, 50%, 60%, 70%, 80%, 90% oder 100% des Radius Rₚ der Prozesswalze 2 betragen. Dabei kann der Seitenabstand SA sogar noch größere Werte ausmachen, und zwar zumindest 110%, 120%, 130% oder beispielsweise sogar 140% des Wertes des Radius der Prozesswalze 2. Mit anderen Worten läuft in den zuletzt genannten Fällen der Vektor der Zustellrichtung ZR völlig an der Prozesswalze 2 vorbei, schneidet die Prozesswalze 2 also nicht, wie insbesondere aus Figur 9 zu ersehen ist.

Der Winkel zwischen der Zustellrichtung ZR und der Kraftbeaufschlagungsrichtung FR können bevorzugt so dimensioniert sein, dass der Winkel zwischen der Zustellrichtung ZR und der Kraftbeaufschlagungsrichtung FR zwischen zwei in Betriebsstellung befindlichen Walzen 3, 4; 2 größer als 5°, insbesondere größer als 10°, 15°, 20°, 25°, 30°, 35°, 40° und insbesondere kleiner als 80°, 70°, 60°, 55°, 50°, 45° oder 40° ist.

In Figuren 8.3 und 8.4 sind entsprechende Darstellungen zu Figuren 8.1 und 8.2 wiedergegeben, jedoch bei unterschiedlich, d.h. abweichend eingestellter Anschlaghöhe h2, die kleiner ist als die in Figuren 7.1 und 7.2 gezeigte Anschlaghöhe h1.

Durch die andere geringere Anschlaghöhe h2, die durch Verstellung der Anschlagfläche 9.1 in Richtung Anpresswalze 2 wie geschildert verstellt werden kann, ergibt sich eine entsprechend definierte andere Endposition der Anpresswalze, da in diesem Falle der zugehörige Verschwenkhebel 7.1 im Uhrzeigersinn weiter verstellt werden kann, bis der Anschlagbolzen 9.2 an dem Anschlag bzw. der Anschlagfläche 9.1 auftrifft und ein weiteres Verschwenken verhindert. Dadurch kommt es auch zu einer tiefer liegenden Anpress- oder Berührlinie zwischen dem Mantel der Anpresswalze bzw. dem Mantel der Prozesswalze und damit zu einer anderen Drucklinie auf die zwischen beiden Walzen hindurch bewegte Materialbahn F.

In Figur 8.4 ist schließlich entsprechend zu Figur 8.2 eine Darstellung wiedergegeben, in der die Anpresswalze 3 bei der vorgegebenen Anschlaghöhe h2 in ihrer Parkposition verfahren ist.

Diese Darstellungen zeigen aber auch, dass insbesondere bei Verfahren der Anpresswalze in ihre Parkposition ein völlig problemloses Einfädeln der Materialbahn F möglich ist, da die gesamte Verstelleinrichtung einschließlich der zugehörigen Schwenkachsen, Verstellhebel, Kraftbetätigungseinheiten etc. zu dem Körper der Prozesswalze 2 versetzt liegend angeordnet ist.

Entsprechend zu den geschilderten Darstellungen ist die Wirkungsweise bezüglich einer zusätzlich oder alternativ vorgesehenen ausgangsseitigen Anpress- oder Nipwalze 4.

Das gezeigte Ausführungsbeispiel ist so erläutert worden, dass letztlich die Anlage- oder Kontaktlinie KL, längs derer die Anpresswalze 3 die Oberfläche des Walzenmantels der Prozesswalze 2 (bzw. den darauf hinweg bewegten Film F) berührt, durch Lageveränderung des Anschlages 9.1 eingestellt werden kann. Dies kann motorisch oder wie erläutert auch über eine Spindel erfolgen. Durch die Zustellbewegung ZR über die Kraftbeaufschlagungseinrichtung 10 wird nach Erreichen des Anschlages 9.2 auf einer Anschlagfläche 9.1 die Anpresswalze 3 zunehmend mehr in den Darstellungen gemäß Figur 8.1 und 8.3 im Gegenuhrzeigersinn auf die Prozesswalze zu verschwenkt und daran angepresst. Möglich wäre grundsätzlich auch eine kinematische Umkehrung dergestalt, dass über eine Einstelleinrichtung letztlich eine bestimmte Lage der Schwenkachse 8 für den Verschwenkhebel 7 mit den beiden Schwenkhebeln 7.1a und 7.1b eingestellt wird, und dass dann beispielsweise über eine motorische Einheit die Anschlagfläche 9.1 entgegen der in den Zeichnungen dargestellten Zustellrichtung (aber in gleicher paralleler Ausrichtung dazu) von der Prozesswalze weg verstellt wird, bis nach Auflaufen auf den Anschlag 9.2 die Anpresswalze 3 zunehmend mehr auf die Prozesswalze 2 zuverschwenkt wird und hierüber einstellbar die Kraftbeaufschlagung der Anpresswalze auf den Mantel der Prozesswalze wirksam einstellbar ist.

Bei dem bisher geschilderten Ausführungsbeispiel wird die Schwenkachse 8 des Verstellhebels 7 nur linear entsprechend der Zustellrichtung oder entgegengesetzter Richtung bei Betätigung der Kraftbetätigungseinrichtung verstellt. Sollte der Verschwenkhebel in unterschiedlicher Winkellage verschwenkt werden, so würde beim Auflaufen des Anschlages 9.2 auf der Anschlagfläche 9.1 eine gewisse parallele Verschiebung des Anschlages 9.2 relativ zur Anschlagfläche 9.1 erfolgen und zwar in Abhängigkeit der unterschiedlichen Ausrichtung des entsprechenden den Anschlagbolzen 9.2 tragenden Hebelarmes 7.1b.

Die geschilderten Ausführungsbeispiele sind so aufgebaut, dass der Anschlag 9.2 nur einseitig anschlagsbegrenzt an der Anschlagfläche 9.1 anschlägt. Dies erlaubt es die Anpresswalze und den zugehörigen Verschwenkhebel ohne Winkelverstellung über die Kraftbetätigungseinrichtung entgegengesetzt zur Zustellrichtung von der Prozesswalze linear (also geradlinig) weg zu verfahren oder auf die Prozesswalze zu zu verfahren. Der Anschlag 9.2 könnte aber auch in beiden entgegengesetzten Richtungen anschlagsbegrenzt gehalten sein, so dass dann bei wirksam werdender Kraftbetätigungseinrichtung in Zustellrichtung ZR (oder in entgegengesetzter Richtung dazu) die Anpresswalze 3 stets zwangsweise durch die lineare Verstellung der sie tragenden Schwenkachse 8 eine Winkel-Verdrehbewegung mit durchführen würde.

Die erläuterte winkelverstellbare Anpresswalze kann also in allen Prozessen und auf allen Gebieten eingesetzt werden, wo entsprechende Anpress- oder Nipwalzen mit entsprechenden Prozesswalzen auch unter Hindurchführung einer Materialbahn F druckbelastet werden sollen. Derartige verstellbare Anpress- oder Nipwalzen können also insbesondere auf dem Gebiet der Folienherstellung, d.h. auf dem Gebiet von Folienreckanlagen eingesetzt werden, wie aber auch beispielsweise auf dem Gebiet der Herstellung und der Verarbeitung von Metallbahnen, Papierbahnen, Kunststoffen allgemein etc. Dabei werden die Anpresswalzen in der Regel über die gesamte Arbeitsbreite AB der zu bearbeitenden Materialbahn ausgebildet, weisen also in der Regel eine axiale Länge auf, die mit der axialen Länge der zugehörigen Prozesswalze vergleichbar ist. Nipwalzen sind demgegenüber in ihrer axialen Erstreckung kürzer ausgebildet als die Arbeitsbreite AB der Materialbahn. Von daher werden Nipwalzen üblicherweise an den Rändern der Material- oder Warenbahn positioniert und eingesetzt, um dort unter Hindurchführung der Materialbahn mit einer entsprechenden Prozesswalze zusammenzuwirken.

Die geschilderten Maßnahmen gelten grundsätzlich auch für eine Anpresswalze 4, die ablaufseitig, das heißt auf Seite der Abzugsrichtung der Materialbahn F auf der Prozesswalze angeordnet ist, wie sich dies grundsätzlich aus den ersten Ausführungsbeispielen gemäß Figur 1 bis 3 ergibt.

Die erläuterten Wirkungen und Vorteile sowie einzelne der bevorzugten Merkmale können dabei wie folgt zusammengefasst werden:
- Durch eine Veränderung der Position der Anschlagfläche oder allgemein des Anschlages 9.1 ist eine leichte und einfache Verstellung der Anlageposition der Anpress- oder Nipwalze selbst während des Betriebes an der Mantelfläche einer damit zusammenwirkenden Prozesswalze unter Hindurchführung einer Materialbahn zwischen beiden Walzen möglich. Für manche Prozesse ist es dabei sehr vorteilhaft und zum Teil sogar notwendig, diese Position tatsächlich laufend zu optimieren.
- Dabei kann durch die erfindungsgemäße Lösung problemlos auch die Anpresskraft verändert werden, und dies ebenfalls auch während des Betriebes und Einsatzes der Anpress- oder Nipwalze.
- Vorteilhaft ist auch, dass die Richtung der Krafteinleitung der Anpresswalze in Richtung Prozesswalze unterschiedlich ist oder sein kann zu der Bewegungsrichtung, in der die Anpresswalze auf die Mantel- oder Oberfläche der damit zusammenwirkenden Prozesswalze zu bewegt wird. Die Richtung der Krafteinleitung ist unterschiedlich zur Bewegungsrichtung der Anpresswalze.

- Die Anpress- oder Nipwalzen sollen und können dabei je nach Anordnung und Anforderung im Wesentlichen folgende Funktionen erfüllen:
   a) Es soll ein Abquetschen der Folie verhindert werden, so dass keine Luftpolster (Luftblasen) zwischen der Folie und der Prozesswalze entstehen können und vorhanden sind.
   b) Durch Andrücken der Prozesswalze in Richtung Prozesswalze soll die dazwischen hindurch bewegte Materialbahn zur Erhöhung der zu übertragenden Abzugs- und/oder Reckkräfte erhöht werden.
   c) Es soll ein Materialeinsprung, insbesondere ein Folieneinsprung an der Prozesswalze verhindert werden, vorzugsweise im Bereich einer ausgangsseitigen Prozesswalze.
   d) Durch die genaue Einstellung der Anlege- oder Kontaktlinie KL können Mikrokratzer auf Folien bzw. Folienbeschichtungen gegenüber herkömmlichen Lösungen deutlich verringert werden.
   e) Ferner kann die Steuermechanik dabei unabhängig von der Mechanik der Prozesswalze ausgestattet sein.
   f) Dabei erweist es sich ebenfalls als sehr positiv, dass eine Verstellung der Lage der Anpresswalze in Relation zur Prozesswalze auch während des Produktionsprozesses, also während der Hindurchführung der Materialbahn F zwischen Anpress- und der Prozesswalze, verstellt werden kann.
   g) Ferner wird ein Einfädeln der Material- und Warenbahn durch die spezifische Ausgestaltung der erfindungsgemäßen Verstelleinrichtung gegenüber herkömmlichen Lösungen deutlich erleichtert.

## Patentansprüche

1. Winkelverstellbare Anpress- oder Nipwalze mit zugehöriger Prozessswalze, mit folgenden Merkmalen
- die Anpress- oder Nipwalze (3, 4) ist mittels einer eine Kraftbetätigungseinheit (10) umfassenden Verstelleinrichtung (VE) zwischen einer Parkposition, in der der Walzenmantel (3,', 4') der Anpress- oder Nipwalze (3, 4) zu dem Mantel (2') der Prozesswalze (2) einen Abstand einnimmt, und einer Betriebsstellung verstellbar, in welcher der Walzenmantel (3', 4') der Anpress- oder Nipwalze (3, 4) auf den Walzenmantel (2') der Prozesswalze (2) angedrückt gehalten ist, wobei eine Materialbahn (F) zwischen dem Walzenmantel (3', 4') zu der Anpress- oder Nipwalze (3, 4) und dem Walzenmantel (2') der Prozesswalze (2) hindurchgeführt ist,
- die Verstelleinrichtung (VE) umfasst eine Verfahreinrichtung (FE) und eine Winkelverstelleinrichtung (WE) mit Hebel (7.1, 7.2), worüber die Lage der Anpress- oder Nipwalze (3, 4) gegenüber der Prozesswalze (2) verstellbar ist,
**gekennzeichnet durch** die folgenden weiteren Merkmale
- der Hebel (7.1, 7.2) der Winkelverstelleinrichtung (WE) umfasst einen um eine Schwenkachse (8.1, 8.2) verschwenkbaren doppelarmigen Hebel (7.1, 7.2) mit zwei Verstellhebel-Armen (7.1a, 7.1b; 7.2a, 7.2b),
- an dem einen Verstellhebel-Arm (7.1a, 7.2a) ist die Anpress- oder Nipwalze (3, 4) drehbar gelagert und an dem anderen Verstellhebel-Arm (7.1b, 7.2b) ist eine Anschlageinrichtung (9.2) vorgesehen,
- die Verfahreinrichtung (VF) ist so aufgebaut, dass hierüber die Schwenkachse (8) des doppelarmigen Hebels (7.1, 7.2) relativ zur Prozesswalze (2) verstellbar ist, und
- die Winkelverstelleinrichtung (WE) umfasst einen zumindest einseitig wirkenden Anschlag (9.1), der mit der an dem einen Verstellhebel-Arm (7.1b, 7.2b) vorgesehenen Anschlageinrichtung (9.2) derart zusammenwirkt, dass bei weiterer Kraftbeaufschlagung durch die Kraftbetätigungseinheit (10) eine auf die Schwenkachse (8.1, 8.2) des doppelarmigen Hebels (7.1, 7.2) wirkende Anpresskraft (FR) erzeugbar ist, worüber die Anpress- oder Nipwalze (3, 4) auf den Walzenmantel (2') der Prozesswalze (2) unter Hindurchführung der Materialbahn (F) zwischen beiden Walzen (3, 4; 2) druckbeaufschlagbar ist.

2. Winkelverstellbare Anpress- oder Nipwalze nach Anspruch 1, **dadurch gekennzeichnet, dass** die Zustellrichtung (ZR), mit der die Anpress- oder Nipwalze (3, 4) über die Kraftbetätigungseinheit (10) verstellbar ist, winklig zur Kraftbeaufschlagungseinrichtung (FR) der Anpress- oder Nipwalze (3, 4) auf die Prozesswalze (2) ausgerichtet ist.

3. Winkelverstellbare Anpress- oder Nipwalze nach Anspruch 1 oder 2, **dadurch gekennzeichnet, dass** die Verstelleinrichtung (VE) einschließlich des zugehörigen Verstellmechanismus (6) zur Verstellung der Anpress- oder Nipwalze (3, 4) relativ zur Prozesswalze (2) in stirnseitiger Ansicht der Prozesswalze (2) radial dazu versetzt angeordnet ist.

4. Winkelverstellbare Anpress- oder Nipwalze nach einem der Ansprüche 1 bis 3, **dadurch gekennzeichnet, dass** die durch die Achsmittellinie (3.5, 4.5) der Anpress- oder Nipwalze (3, 4) verlaufende Zustellbewegung der Anpress- oder Nipwalze (3, 4) in Richtung Prozesswalze (2) in einem Seitenabstand (SA) an der Achsmittellinie (2.5) der Prozesswalze (2) vorbei läuft, wobei der Seitenabstand (SA) zumindest 10%, insbesondere zumindest 20%, 30%, 40%, 50%, 60%, 70%, 80%, 90%, 100%, 110%, 120%, 130% oder 140% des Radius der Prozesswalze (2) beträgt.

5. Winkelverstellbare Anpress- oder Nipwalze nach einem der Ansprüche 1 bis 4, **dadurch gekennzeichnet, dass** die Verstelleinrichtung (VE) eine translatorische Verfahreinrichtung (VF) und eine anschlagsbegrenzte Winkelverstelleinrichtung (WE) umfasst, worüber die Anpress- oder Nipwalze (3, 4) von ihrer Parkposition in ihre Betriebsstellung verfahrbar ist.

6. Winkelverstellbare Anpress- oder Nipwalze nach einem der Ansprüche 1 bis 5, **dadurch gekennzeichnet, dass** die anschlagsbegrenzte Winkelverstelleinrichtung (WE) einen Anschlag oder eine Anschlagfläche (9.1) umfasst, die mit der Anschlagseinrichtung (9.2) an dem Verstellhebel-Arm (7.1b, 7.2b) zusammenwirkt, worüber eine maximale Verschwenkung der Anpress- oder Nipwalze (3, 4) von der Prozesswalze (2) weg begrenzt ist.

7. Winkelverstellbare Anpress- oder Nipwalze nach Anspruch 5 oder 6, **dadurch gekennzeichnet, dass** der Anschlag oder die Anschlagfläche (9.1) der anschlagsbegrenzten Winkelverstelleinrichtung (WE) unterschiedlich einstellbar oder verstellbar ist.

8. Winkelverstellbare Anpress- oder Nipwalze nach Anspruch 6 oder 7, **dadurch gekennzeichnet, dass** der Anschlag oder die Anschlagfläche (9.1) der anschlagsbegrenzten Winkelverstelleinrichtung (WE) manuell oder motorisch verstellbar ist.

9. Winkelverstellbare Anpress- oder Nipwalze nach einem der Ansprüche 1 bis 8, **dadurch gekennzeichnet, dass** die eine unterschiedliche Anlageposition der Anpress- oder Nipwalze (3, 4) bezogen auf den Walzenmantel (2') der Prozesswalze (2) bewirkende Winkelverstelleinrichtung (WE) auch während des Betriebs der Walzen (3, 4; 2) verstellbar ist.

10. Winkelverstellbare Anpress- oder Nipwalze nach einem der Ansprüche 1 bis 9, **dadurch gekennzeichnet, dass** der doppelarmige Verstellhebel (7.1, 7.2) der Winkelverstelleinrichtung (WE) über die Schwenkachse (8.1, 8.2) an der Verfahreinrichtung (VF) verschwenkbar gehalten ist, wobei die Schwenkachse (8.1, 8.2) mittels der Verfahreinrichtung (VF) längs der Zustellrichtung (ZR) verfahrbar ist.

11. Winkelverstellbare Anpress- oder Nipwalze nach Anspruch 10, **dadurch gekennzeichnet, dass** an dem zweiten Verstellhebel-Arm (7.1b, 7.2b) ein an dem Verstellhebel-Arm (7.1b, 7.2b) befestigter oder ausgebildeter Anschlagbolzen (9.2) mit verschwenkbar ist, der in seiner einen Endlage mit dem Anschlag (9.1.) oder der Anschlagfläche (9.1) wechselwirkt.

12. Winkelverstellbare Anpress- oder Nipwalze nach einem der Ansprüche 1 bis 11, **dadurch gekennzeichnet, dass** in Betriebsstellung bei druckbelasteter Anlageposition der Anpress- oder Nipwalze (3, 4) an der Prozesswalze (2) der an dem Verstellhebel (7.1, 7.2) fest angebrachte oder ausgebildete Anschlag oder Anschlagbolzen (9.2) an dem Anschlag oder der Anschlagfläche (9.1) anschlägt.

13. Winkelverstellbare Anpress- oder Nipwalze nach einem der Ansprüche 1 bis 12, **dadurch gekennzeichnet, dass** die eingangs- oder auflaufseitig zur Prozesswalze (2) angeordnete Anpress- oder Nipwalze (3) an dem Verstellhebel (7.1) so gelagert und angebracht ist, dass die Anpress- oder Nipwalze (3, 4) mit dem sie tragenden Verstellhebel (7.1) bis zum Erreichen der anschlagsbegrenzten Endlage, bei der der Anschlag oder Anschlagbolzen (9.2) an dem Anschlag oder der Anschlagfläche (9.1) anschlägt, in Rotationsrichtung der Prozesswalze (2) verschwenkbar ist.

14. Winkelverstellbare Anpress- oder Nipwalze nach einem der Ansprüche 1 bis 12, **dadurch gekennzeichnet, dass** die ausgangs- oder ablaufseitig zur Prozesswalze (2) angeordnete Anpress- oder Nipwalze (4) an dem Verstellhebel (7.1) so gelagert und angebracht ist, dass die Anpress- oder Nipwalze (3, 4) mit dem sie tragenden Verstellhebel (7.1) bis zum Erreichen der anschlagsbegrenzten Endlage, bei der der Anschlag oder Anschlagbolzen (9.2) an dem Anschlag oder der Anschlagfläche (9.1) anschlägt, entgegen der Rotationsrichtung der Prozesswalze (2) verschwenkbar ist.

15. Winkelverstellbare Anpress- oder Nipwalze nach einem der Ansprüche 1 bis 14, **dadurch gekennzeichnet, dass** die Position des Anschlags oder der Anschlagfläche (9.1) voreinstellbar ist, so dass bei voreingestellter Positionierung des Anschlags oder der Anschlagfläche (9.1) über die Kraftbetätigungseinheit (10) die Anpress- oder Nipwalze (3, 4) von der Prozesswalze (2) abhebbar oder auf diese zustellbar ist.

16. Winkelverstellbare Anpress- oder Nipwalze nach einem der Ansprüche 1 bis 14, **dadurch gekennzeichnet, dass** die Anpress- oder Nipwalze (3, 4), wenn sie sich in ihrer Parkposition oder auf dem Weg zu ihrer Parkposition befindet, mittels einer Brems- und/oder Reibeinrichtung (BE) entgegen einer schwerkraftbedingten Verschwenkung gehalten ist.

17. Winkelverstellbare Anpress- oder Nipwalze nach Anspruch 16, **dadurch gekennzeichnet, dass** die Brems- und/ oder Reibeinrichtung (BE) eine axial wirkende Federeinrichtung, insbesondere Tellerfeder-Einrichtung (50.3) und vorzugsweise eine Andrückplatte (50.4) umfasst, worüber die Brems- oder Reibwirkung einstellbar ist.

18. Winkelverstelblare Anpress- oder Nipwalze nach Anspruch 16 oder 17, **dadurch gekennzeichnet, dass** beim Aufsetzen der Anpress- oder Nipwalze (3, 4) auf der Prozesswalze (2) ein Verschwenken der Anpress- oder Nipwalze (3, 4) bis zum Erreichen der anschlagsbegrenzten Endlage unter Überwindung der durch die Brems- und/oder Reibeinrichtung (BE) erzeugten Brems- oder Reibkräfte durchführbar ist.

19. Winkelverstellbare Anpress- oder Nipwalze nach einem der Ansprüche 1 bis 18, **dadurch gekennzeichnet, dass** der Winkel (ϕ1) zwischen der Kraftbeaufschlagungsrichtung (FR) und einer senkrecht zur Zustellrichtung (ZR) verlaufenden Ebene (H) 0° oder größer als 0°, insbesondere größer als 1°, 2°, 3°, 4°, 5°, 10°, 15°, 20°, 25°, 30°, 35°, 40°, 45°, 50°, 55°, 60°, 65°, 70°, 75°, 80°, 85°, 90°, 95°, 100°, 105°, 110°, 115° oder größer als 120° ist.

20. Winkelverstellbare Anpress- oder Nipwalze nach einem der Ansprüche 1 bis 19, **dadurch gekennzeichnet, dass** der Winkel (ϕ1) zwischen der Kraftbeaufschlagungsrichtung (FR) und einer senkrecht zur Zustellrichtung (ZR) verlaufenden Ebene (H) kleiner als 150°, insbesondere kleiner als 140°, 130°, 120°, 110°, 100°, 90°, 80°, 70°, 60°, 50°, 40°, 30°, 20° aber kleiner als 10° ist.

21. Winkelverstellbare Anpress- oder Nipwalze nach einem der Ansprüche 5 bis 20, **dadurch gekennzeichnet, dass** die anschlagsbegrenzte Winkelverstelleinrichtung (WE) einen weiteren Anschlag oder eine weitere Anschlagfläche aufweist, worüber der eine Schenkhebelarm (7.1b) in zwei entgegengesetzten Richtungen anschlagsbegrenzt aber relativ dazu verschwenkbar gehalten ist.

## Claims

1. Adjustable-angle pressure or nip roller comprising an associated process roller, having the following features:
- the pressure or nip roller (3, 4) can be adjusted, by means of an adjustment means (VE) comprising a force activation unit (10), between a parked position in which the roller surface (3, ', 4') of the pressure or nip roller (3, 4) assumes a distance from the surface (2') of the process roller (2), and an operating position in which the roller surface (3', 4') of the pressure or nip roller (3, 4) is held pressed onto the roller surface (2') of the process roller (2), a material web (F) being guided through between the roller surface (3', 4') of the pressure or nip roller (3, 4) and the roller surface (2') of the process roller (2),
- the adjustment means (VE) comprises a displacement means (FE) and an angle adjustment means (WE) comprising a lever (7.1, 7.2), by means of which the position of the pressure or nip roller (3, 4) is adjustable with respect to the process roller (2), **characterised by** the following further features:
- the lever (7.1, 7.2) of the angle adjustment means (WE) comprises a two-armed lever (7.1, 7.2) that is pivotable about a pivot axle (8.1, 8.2) and comprises two adjustment lever arms (7.1a, 7.1b; 7.2a, 7.2b),
- the pressure or nip roller (3, 4) is rotatably mounted on one adjustment lever arm (7.1a, 7.2a), and a stop means (9.2) is provided on the other adjustment lever arm (7.1b, 7.2b),
- the displacement means (VF) is constructed in such a way that it can adjust the pivot axle (8) of the two-armed lever (7.1, 7.2) with respect to the process roller (2), and
- the angle adjustment means (WE) comprises a stop (9.1) which acts at least on one side and which cooperates with the stop means (9.2) provided on one adjustment lever arm (7.1b, 7.2b) in such a way that, when further force is applied by the force activation unit (10), a contact force (FR) acting on the pivot axis (8.1, 8.2) of the two-armed lever (7.1, 7.2) can be generated, by means of which the pressure or nip roller (3, 4) can be pressure-loaded onto the roller surface (2') of the process roller (2) whilst the material web (F) is guided through between the two rollers (3, 4; 2).

2. Adjustable-angle pressure or nip roller according to claim 1, **characterised in that** the feed direction (ZR), in which the pressure or nip roller (3, 4) is adjustable by way of the force activation unit (10), is orientated at an angle to the force application means (FR) of the pressure or nip roller (3, 4) onto the process roller (2).

3. Adjustable-angle pressure or nip roller according to either claim 1 or claim 2, **characterised in that** the adjustment means (VE), including the associated adjustment mechanism (6), is arranged radially offset from the process roller (2) in an end view of said roller for adjusting the pressure or nip roller (3, 4) with respect to the process roller (2).

4. Adjustable-angle pressure or nip roller according to any of claims 1 to 3, **characterised in that** the feed movement of the pressure or nip roller (3, 4) in the direction of the process roller (2), extending through the axial centre line (3.5, 4.5) of the pressure or nip roller (3, 4), passes the axial centre line (2.5) of the process roller (2) at a lateral distance (SA), the lateral distance (SA) being at least 10 %, in particular at least 20 %, 30 %, 40 %, 50 %, 60 %, 70 %, 80 %, 90 %, 100 %, 110 %, 120 %, 130 % or 140 % of the radius of the process roller (2).

5. Adjustable-angle pressure or nip roller according to any of claims 1 to 4, **characterised in that** the adjustment means (VE) comprises a translational displacement means (VF) and a stop-limited angle adjustment means (WE), by means of which the pressure or nip roller (3, 4) is displaceable from the parked position thereof into the operating position thereof.

6. Adjustable-angle pressure or nip roller according to any of claims 1 to 5, **characterised in that** the stop-limited angle adjustment means (WE) comprises a stop or a stop face (9.1) which cooperates with the stop means (9.2) on the adjustment lever arm (7.1b, 7.2b), thus limiting a maximum pivoting of the pressure or nip roller (3, 4) away from the process roller (2).

7. Adjustable-angle pressure or nip roller according to either claim 5 or claim 6, **characterised in that** the stop or the stop face (9.1) of the stop-limited angle adjustment means (WE) can be set or adjusted differently.

8. Adjustable-angle pressure or nip roller according to either claim 6 or claim 7, **characterised in that** the stop or the stop face (9.1) of the stop-limited angle adjustment means (WE) is adjustable manually or in a motorised manner.

9. Adjustable-angle pressure or nip roller according to any of claims 1 to 8, **characterised in that** the angle adjustment means (WE) which brings about a different contact position of the pressure or nip roller (3, 4) with respect to the roller surface (2') of the process roller (2) is still adjustable during the operation of the rollers (3, 4; 2).

10. Adjustable-angle pressure or nip roller according to any of claims 1 to 9, **characterised in that** the two-armed adjustment lever (7.1, 7.2) of the angle adjustment means (WE) is pivotably held on the displacement means (VF) by way of the pivot axle (8.1, 8.2), the pivot axle (8.1, 8.2) being displaceable in the feed direction (ZR) by means of the displacement means (VF).

11. Adjustable-angle pressure or nip roller according to claim 10, **characterised in that** a stop bolt (9.2) that is fixed to or formed on the adjustment lever arm (7.1b, 7.2b) can be pivoted together therewith on the second adjustment lever arm (7.1b, 7.2b) and, in one end position thereof, said stop bolt interacts with the stop (9.1.) or the stop face (9.1).

12. Adjustable-angle pressure or nip roller according to any of claims 1 to 11, **characterised in that**, in the operating position, when the pressure or nip roller (3, 4) is in the pressure-loaded contact position on the process roller (2), the stop or stop bolt (9.2) rigidly attached to or formed on the adjustment lever (7.1, 7.2) strikes against the stop or the stop face (9.1).

13. Adjustable-angle pressure or nip roller according to any of claims 1 to 12, **characterised in that** the pressure or nip roller (3) arranged on the entry or input side with respect to the process roller (2) is mounted on and attached to the adjustment lever (7.1) in such a way that the pressure or nip roller (3, 4) is pivotable together with the adjustment lever (7.1) carrying it, in the rotational direction of the process roller (2), until the stop-limited end position is reached in which the stop or stop bolt (9.2) strikes against the stop or the stop face (9.1).

14. Adjustable-angle pressure or nip roller according to any of claims 1 to 12, **characterised in that** the pressure or nip roller (4) arranged on the output or exit side with respect to the process roller (2) is mounted on and attached to the adjustment lever (7.1) in such a way that the pressure or nip roller (3, 4) is pivotable, together with the adjustment lever (7.1) carrying it, counter to the rotational direction of the process roller (2), until the stop-limited end position is reached in which the stop or stop bolt (9.2) strikes against the stop or the stop face (9.1).

15. Adjustable-angle pressure or nip roller according to any of claims 1 to 14, **characterised in that** the position of the stop or the stop face (9.1) can be pre-set in such a way that, in a pre-set positioning of the stop or stop face (9.1), the pressure or nip roller (3, 4) can be raised from or fed towards the process roller (2) by way of the force activation unit (10).

16. Adjustable-angle pressure or nip roller according to any of claims 1 to 14, **characterised in that** the pressure or nip roller (3, 4), when it is located in the parked position or on the way to the parked position thereof, is held against pivoting under gravity by means of a braking and/or friction means (BE).

17. Adjustable-angle pressure or nip roller according to claim 16, **characterised in that** the braking and/or friction means (BE) comprises an axially acting spring means, in particular a plate spring means (50.3), and preferably a pressure plate (50.4), by means of which the braking or friction effect can be adjusted.

18. Adjustable-angle pressure or nip roller according to either claim 16 or claim 17, **characterised in that**, when the pressure or nip roller (3, 4) is placed on the process roller (2), the pressure or nip roller (3, 4) can be pivoted until the stop-limited end position is reached by overcoming the braking or frictional forces produced by the braking and/or friction means (BE).

19. Adjustable-angle pressure or nip roller according to any of claims 1 to 18, **characterised in that** the angle (ϕ1) between the force application direction (FR) and a plane (H) extending perpendicularly to the feed direction (ZR) is 0° or greater than 0°, in particular greater than 1°, 2°, 3°, 4°, 5°, 10°, 15°, 20°, 25°, 30°, 35°, 40°, 45°, 50°, 55°, 60°, 65°, 70°, 75°, 80°, 85°, 90°, 95°, 100°, 105°, 110°, 115°, or greater than 120°.

20. Adjustable-angle pressure or nip roller according to any of claims 1 to 19, **characterised in that** the angle (ϕ1) between the force application direction (FR) and a plane (H) extending perpendicularly to the feed direction (ZR) is less than 150°, in particular less than 140°, 130°, 120°, 110°, 100°, 90°, 80°, 70°, 60°, 50°, 40°, 30°, 20°, but less than 10°.

21. Adjustable-angle pressure or nip roller according to any of the claims 5 to 20, **characterised in that** the stop-limited angle adjustment means (WE) has as further stop or a further stop face, by means of which one pivot lever arm (7.1b) is held in a stop-limited manner in two opposing directions but pivotable relative thereto.

## Revendications

1. Cylindre presseur ou pinceur à réglage angulaire pourvu d'un cylindre de processus associé, présentant les éléments suivants :
- au moyen d'un dispositif de réglage (VE) comprenant une unité d'application de force (10), le cylindre presseur ou pinceur (3, 4) est mobile entre une position de stationnement dans laquelle l'enveloppe de cylindre (3', 4') du cylindre presseur ou pinceur (3, 4) occupe une distance par rapport à l'enveloppe (2') du cylindre de processus (2), et une position de service dans laquelle l'enveloppe (3', 4') du cylindre presseur ou pinceur (3, 4) est maintenu pressé sur l'enveloppe (2') du cylindre de processus (2), une bande de matériau (F) étant menée entre l'enveloppe (3', 4') du cylindre presseur ou pinceur (3, 4) et l'enveloppe (2') du cylindre de processus (2),
- le dispositif de réglage (VE) comprend un dispositif de déplacement (FE) et un dispositif de réglage angulaire (WE) à leviers (7.1, 7.2), permettant de régler la position du cylindre presseur ou pinceur (3, 4) par rapport au cylindre de processus (2),
**caractérisé par** les autres éléments suivants :
- le levier (7.1, 7.2) du dispositif de réglage angulaire (WE) comprend un levier à bras double (7.1, 7.2) mobile en pivotement autour d'un axe de pivotement (8.1, 8.2) et pourvu de deux bras de levier (7.1a, 7.1b ; 7.2a, 7.2b),
- sur l'un des bras de levier (7.1a, 7.2a), le cylindre presseur ou pinceur (3, 4) est monté mobile en rotation, et sur l'autre bras de levier (7.1b, 7.2b) il est prévu un moyen de butée (9.2),
- le dispositif de déplacement (VF) est conçu de manière à permettre de régler l'axe de pivotement (8) du levier à bras double (7.1, 7.2) par rapport au cylindre de processus (2), et
- le dispositif de réglage angulaire (WE) comprend une butée (9.1) agissant au moins sur un côté qui coopère avec le moyen de butée (9.2) prévu sur ledit bras de levier (7.1b, 7.2b) de telle sorte que lors d'une poursuite de la sollicitation de force par l'unité d'application de force (10), il est possible de générer une force de pressage (FR) agissant sur l'axe de pivotement (8.1, 8.2) du levier à bras double (7.1, 7.2), permettant de solliciter en pression le cylindre presseur ou pinceur (3, 4) sur l'enveloppe (2') du cylindre de processus (2) en menant la bande de matériau (F) entre les deux cylindres (3, 4 ; 2).

2. Cylindre presseur ou pinceur à réglage angulaire selon la revendication 1, **caractérisé en ce que** le dispositif d'approche (ZR) permettant de régler le cylindre presseur ou pinceur (3, 4) par l'unité d'application de force (10) est orienté sous un angle par rapport au dispositif de sollicitation de force (FR) du cylindre presseur ou pinceur (3, 4) sur le cylindre de processus (2).

3. Cylindre presseur ou pinceur à réglage angulaire selon la revendication 1 ou 2, **caractérisé en ce que** le dispositif de réglage (VE), y compris le mécanisme de réglage associé (6) pour le réglage du cylindre presseur ou pinceur (3, 4) par rapport au cylindre de processus (2) et observé en vue frontale du cylindre de processus (2), est agencé en décalage radial par rapport à celui-ci.

4. Cylindre presseur ou pinceur à réglage angulaire selon l'une des revendications 1 à 3, **caractérisé en ce que** le mouvement d'approche du cylindre presseur ou pinceur (3, 4), passant par la ligne centrale axiale (3.5, 45) du cylindre presseur ou pinceur (3, 4), en direction du cylindre de processus (2) s'étend à une distance latérale (SA) à côté de la ligne centrale axiale (2.5) du cylindre de processus (2), la distance latérale (SA) étant au moins de 10 %, en particulier au moins de 20 %, 30 %, 40 %, 50 %, 60 %, 70 %, 80 %, 90 %, 100 %, 110 %, 120 %, 130 % ou 140 % du rayon du cylindre de processus (2).

5. Cylindre presseur ou pinceur à réglage angulaire selon l'une des revendications 1 à 4, **caractérisé en ce que** le dispositif de réglage (VE) comprend un dispositif de déplacement en translation (VF) et un dispositif de réglage angulaire (WE) limité par butée permettant de déplacer le cylindre presseur ou pinceur (3, 4) depuis sa position de stationnement jusque dans sa position de service.

6. Cylindre presseur ou pinceur à réglage angulaire selon l'une des revendications 1 à 5, **caractérisé en ce que** le dispositif de réglage angulaire (WE) limité par butée comprend une butée ou une surface de butée (9.1) qui coopère avec le moyen de butée (9.2) sur le bras de levier (7.1b, 7.2b), ce qui limite un pivotement maximal du cylindre presseur ou pinceur (3, 4) en éloignement du cylindre de processus (2).

7. Cylindre presseur ou pinceur à réglage angulaire selon la revendication 5 ou 6, **caractérisé en ce que** la butée ou la surface de butée (9.1) du dispositif de réglage angulaire (WE) limité par butée est réglable ou déplaçable différemment.

8. Cylindre presseur ou pinceur à réglage angulaire selon la revendication 6 ou 7, **caractérisé en ce que** la butée ou la surface de butée (9.1) du dispositif de réglage angulaire (WE) est réglable manuellement ou par voie motrice.

9. Cylindre presseur ou pinceur à réglage angulaire selon l'une des revendications 1 à 8, **caractérisé en ce que** le dispositif de réglage angulaire (WE) procurant une position d'appui différente du cylindre presseur ou pinceur (3, 4) par rapport à l'enveloppe (2') du cylindre de processus (2) est réglable également pendant le fonctionnement des cylindres (3, 4 ; 2).

10. Cylindre presseur ou pinceur à réglage angulaire selon l'une des revendications 1 à 9, **caractérisé en ce que** le levier de réglage à bras double (7.1, 7.2) du dispositif de réglage angulaire (WE) est maintenu en pivotement sur le dispositif de déplacement (VF) par l'axe de pivotement (8.1, 8.2), l'axe de pivotement (8.1, 8.2) étant mobile le long de la direction d'approche (ZR) au moyen du dispositif de déplacement (VF).

11. Cylindre presseur ou pinceur à réglage angulaire selon la revendication 10, **caractérisé en ce que** sur le second bras de levier (7.1b, 7.2b), un goujon de butée (9.2) fixé ou réalisé sur le bras de levier (7.1b, 7.2b) est mobile en pivotement avec celui-ci, qui, dans l'une de ses positions de fin de course, interagit avec la butée (9.1) ou avec la surface de butée (9.1).

12. Cylindre presseur ou pinceur à réglage angulaire selon l'une des revendications 1 à 11, **caractérisé en ce que** dans la position de service, en configuration d'appui sans pression du cylindre presseur ou pinceur (3, 4) contre le cylindre de processus (2), la butée ou le goujon de butée (9.2) fermement fixé(e) ou réalisé(e) sur le levier de réglage (7.1, 7.2) vient buter contre la butée ou contre la surface de butée (9.1).

13. Cylindre presseur ou pinceur à réglage angulaire selon l'une des revendications 1 à 12, **caractérisé en ce que** le cylindre presseur ou pinceur (3) agencé du côté entrée ou du côté montée par rapport au cylindre de processus (2) est monté et fixé sur le levier de régale (7.1) de telle sorte que le cylindre presseur ou pinceur (3, 4) est mobile en pivotement en direction de rotation du cylindre de processus (2), avec le levier de réglage (7.1) qui le porte, jusqu'à atteindre la position de fin de course limitée par butée dans laquelle la butée ou le goujon de butée (9.2) vient buter contre la butée ou contre la surface de butée (9.1).

14. Cylindre presseur ou pinceur à réglage angulaire selon l'une des revendications 1 à 12, **caractérisé en ce que** le cylindre presseur ou pinceur (4) agencé du côté sortie ou du côté descente par rapport au cylindre de processus (2) est monté et fixé sur le levier de régale (7.1) de telle sorte que le cylindre presseur ou pinceur (3, 4) est mobile en pivotement en sens opposé à la direction de rotation du cylindre de processus (2), avec le levier de réglage (7.1) qui le porte, jusqu'à atteindre la position de fin de course limitée par butée dans laquelle la butée ou le goujon de butée (9.2) vient buter contre la butée ou contre la surface de butée (9.1).

15. Cylindre presseur ou pinceur à réglage angulaire selon l'une des revendications 1 à 14, **caractérisé en ce que** la position de la butée ou de la surface de butée (9.1) est réglable préalablement, de sorte que lors d'un positionnement réglé préalablement de la butée ou de la surface de butée (9.1), le cylindre presseur ou pinceur (3, 4) peut être soulevé ou approché du cylindre de processus (2) par l'unité d'application de force (10).

16. Cylindre presseur ou pinceur à réglage angulaire selon l'une des revendications 1 à 14, **caractérisé en ce que** le cylindre presseur ou pinceur (3, 4), lorsqu'il se trouve dans sa position de stationnement ou qu'il est en train de prendre sa position de stationnement, est maintenu à l'encontre d'un pivotement dû à la gravité au moyen d'un dispositif de freinage et/ou de friction (BE).

17. Cylindre presseur ou pinceur à réglage angulaire selon la revendication 16, **caractérisé en ce que** le dispositif de freinage et/ou de friction (BE) comprend un dispositif formant ressort à effet axial, en particulier un dispositif formant rondelle-ressort (50.3) et de préférence un plateau presseur (50.4) permettant de régler l'effet de freinage ou de friction.

18. Cylindre presseur ou pinceur à réglage angulaire selon la revendication 16 ou 17, **caractérisé en ce que** lors de la pose du cylindre presseur ou pinceur (3, 4) sur le cylindre de processus (2), un pivotement du cylindre presseur ou pinceur (3, 4) jusqu'à atteindre la position de fin de course limitée par butée est possible en surmontant les forces de freinage ou de friction générées par le dispositif de freinage et/ou de friction (BE).

19. Cylindre presseur ou pinceur à réglage angulaire selon l'une des revendications 1 à 18, **caractérisé en ce que** l'angle (ϕ1) entre la direction de sollicitation de force (FR) et un plan (H) perpendiculaire à la direction d'approche (ZR) est de 0° ou supérieur à 0°, en particulier supérieur à 1°, 2°, 3°, 4°, 5°, 10°, 15°, 20°, 25°, 30°, 35°, 40°, 45°, 50°, 55°, 60°, 65°, 70°, 75°, 80°, 85°, 90°, 95°, 100°, 105°, 110°, 115° ou supérieur à 120°.

20. Cylindre presseur ou pinceur à réglage angulaire selon l'une des revendications 1 à 19, **caractérisé en ce que** l'angle (ϕ1) entre la direction de sollicitation de force (FR) et un plan (H) perpendiculaire à la direction d'approche (ZR) est inférieur à 150°, en particulier inférieur à 140°, 130°, 120°, 110°, 100°, 90°, 80°, 70°, 60°, 50°, 40°, 30°, 20°, mais inférieur à 10°.

21. Cylindre presseur ou pinceur à réglage angulaire selon l'une des revendications 5 à 20, **caractérisé en ce que** le dispositif de réglage angulaire (WE) limité par butée comprend une autre butée ou une autre surface de butée par laquelle l'un des bras de levier (7.1b) est maintenu en étant limité par butée dans deux directions opposées, mais mobile en pivotement par rapport à celles-ci.
